# EUROPEAN PATENT APPLICATION

(11) **EP 4 704 368 A1**
(43) Date of publication of application: **04.03.2026**
(21) Application number: 24795704.6
(22) Date of filing: 19.03.2024
(51) Int. Cl.: H04L 9/08, H04L 9/30

(54) **DATA PROCESSING METHOD AND APPARATUS, DEVICE AND MEDIUM**

(30) Priority: 28.04.2023 CN 202310487501
(71) Applicant: Tencent Technology (Shenzhen) Company Limited, Shenzhen, Guangdong 518057 (CN)
(72) Inventor: PENG, Shijian, Shenzhen, Guangdong 518057 (CN)
(74) Representative: Gunzelmann, Rainer
(86) International application number: PCT/CN2024/082469
(87) International publication number: WO 2024/222321

(57) **Abstract**

This application provides a data processing method and apparatus, a device, and a medium. The method includes: when receiving encrypted session data, obtaining, by a first service terminal, a first encrypted data component from the encrypted session data, and generating a random mask configured to perform mask processing; performing mask processing on the first encrypted data component by using the random mask to obtain mask data corresponding to the first encrypted data component, and obtaining, based on a first private key component and the mask data, a first decrypted data component to be transmitted to a second service terminal, the second service terminal being configured to perform collaborative decryption on the first decrypted data component based on a second private key component to obtain a second decrypted data component to be returned to the first service terminal; and obtaining session service data by using the second decrypted data component and the first encrypted data component. In this application, private key leakage caused by single-point storage of the private key can be avoided, and reliability and security of session service data obtained through decryption can also be improved.

## Description

### RELATED APPLICATION

This application claims priority to Chinese Patent Application No. 2023104875016, entitled "DATA PROCESSING METHOD AND APPARATUS, DEVICE, AND MEDIUM" filed with the China National Intellectual Property Administration on April 28, 2023, which is incorporated herein by reference in its entirety.

### FIELD OF THE TECHNOLOGY

This application relates to the field of communication security technologies, and in particular, to a data processing method and apparatus, a device, and a medium.

### BACKGROUND OF THE DISCLOSURE

Currently, to ensure security of session service data transmitted during a session process, one of two service objects participating in the session needs to encrypt, during the session process by using a public key of the other service object, session service data that needs to be transmitted. In this way, when receiving encrypted session service data, the other service object may decrypt the encrypted session service data by using a private key of the other service object.

However, the inventors have found in practice that during a session between a service object A and a service object B, to ensure security of session service data transmitted by the service object A to the service object B, a service terminal (for example, a terminal U1) corresponding to the service object A needs to pre-encrypt, by using a public key of the service object B, session service data that needs to be transmitted, and then transmit encrypted session service data (namely, encrypted session data) to a service terminal (for example, a terminal U2) corresponding to the service object B. In this case, the terminal U2 may directly decrypt the encrypted session service data by using a private key of the service object B that is stored in storage space of the terminal U2, to obtain the session service data through decryption. The private key of the service object B that can be directly used for decryption to obtain the session service data is stored in a single-point mode (to be specific, the private key used for decryption is stored in the storage space of the service terminal of the service object B). In this way, when the private key of the service object B that is stored on the terminal U2 in the single-point mode encounters private key leakage, it is difficult to ensure security and reliability of session data obtained through decryption.

### SUMMARY

Embodiments of this application provide a data processing method and apparatus, a device, and a medium. In the method, private key components used for collaborative decryption are respectively stored on different service terminals. This not only can avoid a risk of unauthorized leakage of a complete private key due to single-point storage of the private key in the related art, but also can improve reliability and security of session service data obtained through decryption.

An aspect of the embodiments of this application provides a data processing method. The method is performed by a first service terminal among a plurality of service terminals. The plurality of service terminals further include a second service terminal other than the first service terminal. The first service terminal stores a first private key component pre-generated for a first service object. The second service terminal stores a second private key component pre-generated for a second service object. The first private key component and the second private key component are configured to collaboratively generate a collaborative public key for data encryption. Both the first service object and the second service object are service objects participating in data decryption. The method includes:
receiving encrypted session data, the encrypted session data being obtained by performing data encryption on session service data to be transmitted using the public key;
obtaining a first encrypted data component from the encrypted session data, and generating a random mask configured to perform mask processing on the first encrypted data component;
performing mask processing on the first encrypted data component by using the random mask to obtain mask data corresponding to the first encrypted data component, and obtaining, based on the first private key component and the mask data, a first decrypted data component corresponding to the first encrypted data component;
transmitting the first decrypted data component to the second service terminal, so as to enable the second service terminal to perform collaborative decryption on the first decrypted data component based on the second private key component to obtain a second decrypted data component to be returned to the first service terminal; and
obtaining the session service data by using the second decrypted data component and the first encrypted data component for the data decryption.

An aspect of the embodiments of this application provides a data processing method. The method is performed by a second service terminal among a plurality of service terminals. The plurality of service terminals further include a first service terminal other than the second service terminal. The first service terminal stores a first private key component pre-generated for a first service object. The second service terminal stores a second private key component pre-generated for a second service object. The first private key component and the second private key component are configured to collaboratively generate a collaborative public key for data encryption. Both the first service object and the second service object are service objects participating in data decryption. The method includes:
receiving a first decrypted data component, the first decrypted data component being obtained by the first service terminal based on the first private key component and mask data, the mask data being obtained by the first service terminal by performing mask processing on a first encrypted data component in encrypted session data by using a random mask, the random mask being configured to indicate the first service terminal to perform mask processing on the first encrypted data component, the encrypted session data being transmitted by a data encryption terminal corresponding to an encryption service object, the encryption service object being a service object that performs data encryption on to-be-transmitted session service data, and the encrypted session data being obtained by performing data encryption on the session service data to be transmitted by using the public key;
performing collaborative decryption on the first decrypted data component based on the second private key component to obtain a second decrypted data component through collaborative decryption; and
returning the second decrypted data component to the first service terminal, so as to enable the first service terminal to obtain the session service data by using the second decrypted data component and the first encrypted data component for the data decryption.

An aspect of the embodiments of this application provides a data processing apparatus. The data processing apparatus runs on a first service terminal among a plurality of service terminals. The plurality of service terminals further include a second service terminal other than the first service terminal. The first service terminal stores a first private key component pre-generated for a first service object. The second service terminal stores a second private key component pre-generated for a second service object. The first private key component and the second private key component are configured to collaboratively generate a public key for data encryption. Both the first service object and the second service object are service objects participating in data decryption. The apparatus includes:
a receiving module, configured to receive encrypted session data, the encrypted session data being obtained by performing data encryption on session service data to be transmitted using the public key;
a mask generation module, configured to obtain a first encrypted data component from the encrypted session data, and generating a random mask configured to perform mask processing on the first encrypted data component;
a decrypted data component generation module, configured to perform mask processing on the first encrypted data component by using the random mask to obtain mask data corresponding to the first encrypted data component, and obtain, based on the first private key component and the mask data, a first decrypted data component corresponding to the first encrypted data component;
a transmitting module, configured to transmit the first decrypted data component to the second service terminal, so as to enable the second service terminal to perform collaborative decryption on the first decrypted data component based on the second private key component to obtain a second decrypted data component to be returned to the first service terminal; and
a decryption module, configured to obtain the session service data by using the second decrypted data component and the first encrypted data component for the data decryption.

An aspect of the embodiments of this application provides a data processing apparatus. The data processing apparatus runs on a second service terminal among a plurality of service terminals. The plurality of service terminals further include a first service terminal other than the second service terminal. The first service terminal stores a first private key component pre-generated for a first service object. The second service terminal stores a second private key component pre-generated for a second service object. The first private key component and the second private key component are configured to collaboratively generate a public key for data encryption. Both the first service object and the second service object are service objects participating in data decryption. The apparatus includes:
a receiving module, configured to receive a first decrypted data component, the first decrypted data component being obtained by the first service terminal based on the first private key component and mask data, the mask data being obtained by the first service terminal by performing mask processing on a first encrypted data component in encrypted session data by using a random mask, the random mask being configured to indicate the first service terminal to perform mask processing on the first encrypted data component, the encrypted session data being transmitted by a data encryption terminal corresponding to an encryption service object, the encryption service object being a service object that performs data encryption on to-be-transmitted session service data, and the encrypted session data being obtained by performing data encryption on the session service data to be transmitted by using the public key;
a collaborative decryption module, configured to perform collaborative decryption on the first decrypted data component based on the second private key component to obtain a second decrypted data component through collaborative decryption; and
a return module, configured to return the second decrypted data component to the first service terminal, so as to enable the first service terminal to obtain the session service data by using the second decrypted data component and the first encrypted data component for the data decryption.

According to an aspect of the embodiments of this application, a computer device is provided, including: a memory and a processor, the memory being connected to the processor, the memory being configured to store a computer program, and the processor being configured to invoke the computer program, to cause the computer device to perform the method according to any one of the foregoing aspects in the embodiments of this application.

An aspect of the embodiments of this application provides a computer-readable storage medium, the computer-readable storage medium storing a computer program, and the computer program being suitable for being loaded and executed by a processor, so that a computer device having the processor performs the method provided in the foregoing aspect of the embodiments of this application.

An aspect of this application provides a computer program product or a computer program, the computer program product or the computer program including computer instructions, and the computer instructions being stored in a computer-readable storage medium. A processor of a computer device reads the computer instructions from the computer-readable storage medium, and the processor executes the computer instructions, so that the computer device performs the method provided in the foregoing aspect.

In the embodiments of this application, a first service terminal may receive encrypted session data transmitted by a data encryption terminal corresponding to an encryption service object, the encrypted session data being obtained by the data encryption terminal by performing data encryption on session service data by using a collaborative public key, the encryption service object herein being a service object that performs data encryption on to-be-transmitted session service data, and the collaborative public key being collaboratively generated based on a first private key component of a first service object that is prestored on the first service terminal and a second private key component of a second service object that is prestored on a second service terminal. Further, the first service terminal may obtain a first encrypted data component from the encrypted session data, and generate a random mask configured for performing mask processing on the first encrypted data component. In this way, when performing mask processing on the first encrypted data component by using the random mask to obtain mask data, the first service terminal may further obtain, based on the first private key component and the mask data, a first decrypted data component corresponding to the first encrypted data component, to transmit the first decrypted data component to the second service terminal corresponding to the second service object. In addition, the second service terminal may perform collaborative decryption on the first decrypted data component based on the second private key component to obtain a second decrypted data component through collaborative decryption. In this way, when receiving the second decrypted data component returned by the second service terminal, the first service terminal may obtain the session service data through decryption based on the second decrypted data component and the first encrypted data component. In the embodiments of this application, during collaborative decryption by the first service terminal and the second service terminal, either of the first service object and the second service object that participate in the collaborative decryption cannot independently obtain, through decryption, session service data during a session process by using a private key component stored by the first service object or the second service object in a single-point mode. In other words, the embodiments of this application provide a new data decryption mode. To be specific, during data decryption, a complete private key (namely, a private key) stored in a single-point mode is no longer directly used for data decryption; instead, data decryption is collaboratively implemented by using private key components of different service objects that are stored on different service terminals. This not only can avoid a risk of unauthorized leakage of a complete private key caused by a storage mode in which the complete private key is directly stored in a single-point mode in an existing solution, but also can improve reliability and security of session service data obtained through decryption.

### BRIEF DESCRIPTION OF THE DRAWINGS

FIG. 1 is a schematic diagram of an architecture of a data processing system according to an embodiment of this application.
FIG. 2 is a schematic diagram in which a data processing solution is applied to an electronic invoice scenario in e-commerce according to an embodiment of this application.
FIG. 3 is a schematic diagram in which a data processing solution is applied to an Internet of Things scenario according to an embodiment of this application.
FIG. 4a is a schematic diagram in which a data processing solution is applied to a cloud computing scenario according to an embodiment of this application.
FIG. 4b is a schematic diagram in which a data processing solution is applied to a blockchain scenario according to an embodiment of this application.
FIG. 5 is a schematic flowchart of a data processing method according to an embodiment of Is this application.
FIG. 6 is a schematic flowchart of a method for generating a collaborative public key according to an embodiment of this application.
FIG. 7 is a schematic flowchart of another data processing method according to an embodiment of Is this application.
FIG. 8 is a schematic flowchart of another data processing method according to an embodiment of Is this application.
FIG. 9 is a schematic flowchart of another data processing method according to an embodiment of Is this application.
FIG. 10 is a schematic diagram of a structure of a data processing apparatus according to an embodiment of this application.
FIG. 11 is a schematic diagram of a structure of another data processing apparatus according to an embodiment of this application.
FIG. 12 is a schematic diagram of a structure of a computer device according to an embodiment of this application.

### DESCRIPTION OF EMBODIMENTS

Embodiments of this application provide a data processing solution for collaborative decryption. A general principle of the data processing solution is as follows: First, each of a plurality of service objects that participate in data decryption needs to independently generate a private key component. Next, the service objects may collaboratively generate a collaborative public key by using their respective private key components in a collaborative operation manner, and publish the collaborative public key. Then, when performing a session with a service object among the plurality of service objects, any service object that needs to perform data encryption may directly perform, by using the published collaborative public key, data encryption on session service data that needs to be transmitted in the session, to ensure security and reliability of the session service data that needs to be transmitted during a session process. Finally, when receiving encrypted session data corresponding to the session service data, the service object among the plurality of objects may implement collaborative decryption on the encrypted session data by using private key components respectively independently stored on service terminals corresponding to different service objects, to finally restore the session service data transmitted in the session.

In the embodiments of this application, a plurality of service objects that participate in data decryption may be collectively referred to as a collaborative decryption object, and any service object that needs to perform data encryption may be collectively referred to as an encryption service object. Further, a service object in the collaborative decryption object (namely, the plurality of service objects) that is configured to extract a first encrypted data component from encrypted session data may be collectively referred to as a first service object, and a service object among the plurality of service objects other than the first service object may be collectively referred to as a second service object. A specific quantity of second service objects is not limited in the embodiments of this application. For example, when the collaborative decryption specifically includes two-party collaborative decryption, there may be one second service object herein. In some embodiments, when the collaborative decryption specifically includes multi-party collaborative decryption performed by three or more parties, there may be a plurality of second service objects herein. To be specific, the first service object and each of a plurality of second service objects separately form a group of two-party collaborative decryption objects that participate in the collaborative decryption, to finally obtain a plurality of different groups of two-party collaborative decryption objects. In this way, when a first service object performs a session with an encryption service object, the first service object can receive encrypted session data obtained by the encryption service object by performing data encryption on session service data by using a collaborative public key.

In addition, in the embodiments of this application, each of a plurality of service objects that participate in data decryption corresponds to a service terminal. For ease of distinguishing, a service terminal configured to store a private key component of a first service object (that is, a first private key component) may be collectively referred to as a first service terminal, and a service terminal configured to store a private key component of a second service object (that is, a second private key component) may be collectively referred to as a second service terminal. In other words, in the embodiments of this application, a first private key component of one first service object may be used with a second private key component of one second service object to collaboratively generate a collaborative public key. Therefore, when there are a plurality of second service objects, a second private key component of each second service object may be used with the first private key component of the first service object to collaboratively generate different collaborative public keys. In this way, in the embodiments of this application, when the collaborative public keys are published and uploaded to a server, when recording the received collaborative public keys, the server may also record a group of two-party collaborative decryption objects that participate in collaborative generation of the collaborative public keys. To be specific, the server may synchronously record an association relationship between each received collaborative public key and each group of two-party collaborative decryption objects. In this way, for an encryption service object configured to perform data encryption, when randomly obtaining a collaborative public key from the server, the encryption service object may further perform, by using the currently obtained collaborative public key, data encryption on session service data that currently needs to be transmitted, and then may directly or indirectly transmit, based on the currently obtained collaborative public key, encrypted session data obtained through encryption to a first service object having an association relationship with the collaborative public key, so that the first service object can subsequently indicate, based on the association relationship, a second service object having an association relationship with the collaborative public key to participate in collaborative decryption, to finally restore the session service data.

Similarly, in the embodiments of this application, a service terminal corresponding to an encryption service object configured to perform data encryption may be collectively referred to as a data encryption terminal. An encryption service object corresponding to the data encryption terminal herein may be a second service object in a collaborative decryption object, or may be another service object that does not participate in collaborative decryption. A specific object type of the encryption service object is not limited herein.

For ease of understanding, an example in which a collaborative decryption object (namely, a plurality of service objects) includes at least a group of two-party collaborative decryption objects (for example, two service objects) participating in collaborative decryption is used. In this case, the collaborative decryption object may specifically include a first service object and a second service object. The first service object may generate its own first private key component by using a first service terminal, and the second service object may generate its own second private key component by using a second service terminal. Then, in the embodiments of this application, a public key collaboratively generated by the first service terminal or the second service terminal based on the first private key component and the second private key component may be collectively referred to as a collaborative public key.

In the embodiments of this application, a private key component (for example, the first private key component and/or the second private key component) is a random value randomly generated by a corresponding service terminal based on a preset private key value range (for example, [2, n-1]). When private key components (for example, the first private key component and the second private key component) in the embodiments of this application are used for collaborative decryption, a complete private key configured for performing data decryption on encrypted session data (for example, a first encrypted data component in the encrypted session data) may be obtained through simulation in a collaborative decryption mode indicated by a collaborative decryption policy. This means that any service object participating in the collaborative decryption cannot independently implement data decryption on the first encrypted data component directly by using a respective private key component. n is an elliptic curve parameter of a collaborative elliptic curve agreed upon (namely, determined) based on an asymmetric encryption algorithm in the embodiments of this application. The collaborative elliptic curve herein is an elliptic curve that needs to be used for performing data encryption and/or data decryption on session service data.

In the embodiments of this application, neither the first service terminal nor the second service terminal directly stores a complete private key corresponding to the collaborative public key; instead, the first service terminal and the second service terminal separately store private key components configured for collaboratively representing the complete private key (for example, the first service terminal may be configured to independently store the first private key component, and the second service terminal may be configured to independently store the second private key component). In this way, neither the first service terminal nor the second service terminal can directly obtain the session service data by independently performing decryption by using the private key components stored on the first service terminal and the second service terminal; instead, the first service terminal and the second service terminal need to jointly participate in data decryption based on the private key components respectively stored on the first service terminal and the second service terminal, to obtain the session service data through decryption. This can avoid a risk of private key leakage caused by current single-point storage of a complete private key.

When an encryption object (namely, the encryption service object) obtains the published collaborative public key by using a service terminal (namely, the data encryption terminal) of the encryption object, the encryption object may encrypt session service data (in other words, perform data encryption) by using the collaborative public key to obtain encrypted session data through encryption. In this case, if a first service object needs to obtain the session service data through decryption, the first service object needs to perform collaborative decryption on the encrypted session data in the collaborative decryption mode by using private key components of service objects in a collaborative decryption object (for example, the two-party collaborative decryption object), to securely and reliably obtain the session service data through decryption.

In other words, in the foregoing data processing solution, service terminals corresponding to service objects in a collaborative decryption object may independently generate their own private key components (to be specific, the first service terminal generates the first private key component, and the second service terminal generates the second private key component), and separately store their own private key components. This means that none of parties in a collaborative decryption object (for example, the two-party collaborative decryption object) participating in collaborative decryption can independently obtain session service data during a session process through decryption by using a private key component stored by the party in a single-point mode. To be specific, in the embodiments of this application, private key components used for collaborative decryption are respectively deployed on different service terminals, to not only avoid private key (namely, the complete private key) leakage caused by single-point storage of the private key (namely, the complete private key), but also improve transmission reliability and security of session service data transmitted during a session process. In addition, in the embodiments of this application, encrypted session data transmitted by an encryption service object (which may be, for example, the foregoing encryption object) is collaboratively decrypted by using private key components of service objects in a collaborative decryption object. This not only can implement collaborative decryption on encrypted session data in different application scenarios, to be specific, ensure effectiveness and security of collaborative decryption on encrypted session data in different application scenarios, but also can improve transmission security and reliability of session service data in different application scenarios.

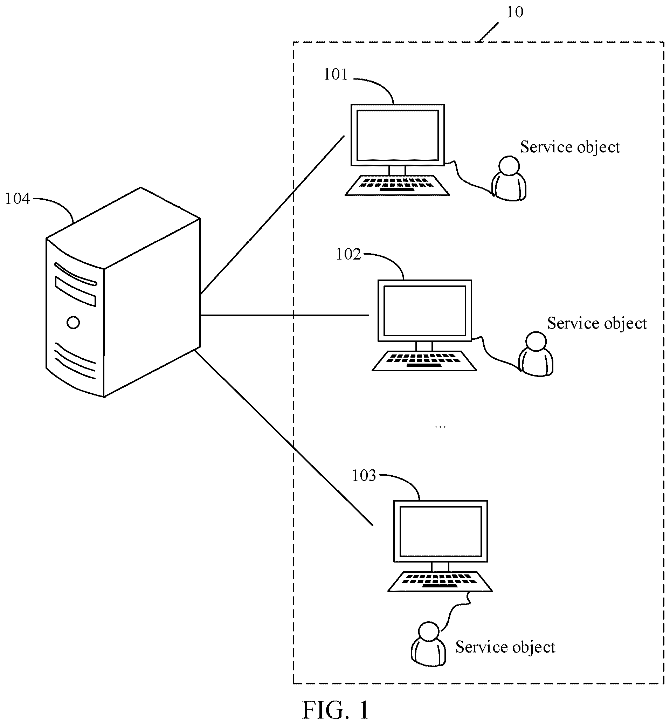

Further, FIG. 1 is a schematic diagram of an architecture of a collaborative decryption system according to an embodiment of this application. The collaborative decryption system may include a service terminal cluster 10 and a server 104. The service terminal cluster 10 may include a plurality of service terminals. For example, the plurality of service terminals herein may specifically include a service terminal 101, a service terminal 102, and a service terminal 103 shown in FIG. 1. In this embodiment of this application, each service terminal in the service terminal cluster 10 may perform a session or data transmission through the server 104. For example, the service terminal 101 may perform a session with the service terminal 102 through the server 104. Similarly, the service terminal 101 may also perform a session with the service terminal 103 through the server 104.

Each service terminal in the service terminal cluster 10 may include, but is not limited to, a smartphone, a tablet computer, a notebook computer, a desktop computer, a smart speaker, a smartwatch, an in-vehicle terminal, a smart wearable device, and the like. The server 104 may be an independent physical server, or may be a server cluster or a distributed system that includes a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform.

Any service terminal in the service terminal cluster 10 may serve as the foregoing first service terminal configured to receive encrypted session data. For example, when the service terminal 101 in the service terminal cluster 10 serves as the first service terminal, the service terminal 101 may be configured to receive encrypted session data transmitted by an encryption service object that is currently performing a session or data transmission. In this case, a service object corresponding to the service terminal 101 may be the foregoing first service object. In other words, the service object (namely, the first service object) corresponding to the service terminal 101 may be a service object in a collaborative decryption object (for example, the foregoing two-party collaborative decryption object) that needs to participate in data decryption. This means that the service terminal 101 (namely, the first service terminal) may generate a first private key component for the first service object and store the first private key component. In embodiments of present application, the service object can be a user, or an identifier. In embodiments of present application, the identifier can be identification information (such as, user identification information) or description information (such as, description information of a user, for example, user's name).

Any service terminal in the service terminal cluster 10 may alternatively serve as the foregoing second service terminal that can participate in data decryption. For example, when the service terminal 102 in the service terminal cluster 10 serves as the second service terminal, the service terminal 102 and the service terminal 101 may perform collaborative decryption. In this case, a service object corresponding to the service terminal 102 (namely, the second service terminal) may be the foregoing second service object. To be specific, the service object (namely, the second service object) corresponding to the service terminal 102 herein may also be a service object in the collaborative decryption object (for example, the foregoing two-party collaborative decryption object) that can participate in the data decryption. This means that the service terminal 102 (namely, the second service terminal) may generate a second private key component for the second service object and store the second private key component.

Alternatively, in this embodiment of this application, the service terminal 101 may serve as the second service terminal, and the service terminal 102 may serve as the first service terminal. The first service terminal and the second service terminal herein are essentially different service terminals that are configured to implement collaborative decryption and that are determined according to the foregoing data processing solution. For ease of understanding, a specific process of performing collaborative decryption on encrypted session data by using private key components stored on different service terminals is subsequently described by using an example in which the service terminal 101 serves as the first service terminal and the service terminal 102 serves as the second service terminal.

The foregoing collaborative decryption object may include a plurality of service objects. Any two of the plurality of service objects may constitute, according to the foregoing data processing solution, a pair (or a group) of two-party collaborative decryption objects used for data decryption, to implement collaborative decryption on encrypted session data in different application scenarios. For example, when the plurality of service objects include the service object corresponding to the service terminal 101 and the service object corresponding to the service terminal 102, the service object corresponding to the service terminal 101 and the service object corresponding to the service terminal 102 may serve as service objects in a collaborative decryption object configured to perform two-party collaborative decryption.

In this embodiment of this application, for any two of the plurality of service objects, when any two service objects constitute a two-party collaborative decryption object configured to perform data decryption, a collaborative public key associated with each two-party collaborative decryption object may be further published to the server. In this way, when obtaining a collaborative public key associated with a two-party collaborative decryption object from the server, a data encryption terminal may determine a first service object and a second service object in the two-party collaborative decryption object associated with the collaborative public key. Therefore, the server may subsequently notify a first service terminal corresponding to the first service object and a second service terminal corresponding to the second service object that collaborative decryption may be performed on encrypted session data obtained by the data encryption terminal through encryption. Further, during a multi-party collaborative decryption process, a first service object and a second service object that are configured to implement collaborative decryption may be accurately determined based on an association relationship, prestored on the server, between each collaborative public key and each collaborative decryption object, to further improve security and reliability of data decryption.

After the first service terminal (namely, the service terminal 101) generates the first private key component and the second service terminal (namely, the service terminal 102) generates the second private key component, the first service terminal or the second service terminal may generate, based on the first private key component and the second private key component, a collaborative public key used for data encryption. In an implementation, the first service terminal may generate a first public key component of the first service object based on the first private key component, and transmit the first public key component to the second service terminal through the server 104; and the second service terminal may collaboratively generate a collaborative public key based on the first public key component and the second private key component of the second service terminal, and publish the collaborative public key.

In some embodiments, in another implementation, the second service terminal may generate a second public key component of the second service object based on the second private key component, and transmit the second public key component to the first service terminal through the server 104; and the first service terminal may collaboratively generate a collaborative public key based on the second public key component and the first private key component of the first service terminal, and publish the collaborative public key.

In this embodiment of this application, a service terminal may alternatively be selected from the service terminal cluster 10 as a data encryption terminal. The data encryption terminal may be a terminal used by an encryption service object. The encryption service object may be a service object that needs to perform data encryption on to-be-transmitted session service data during a process of performing a session with the first service object.

In another implementation, an encryption service object may alternatively establish a session with a second service terminal through a data encryption terminal (to be specific, the data encryption terminal may establish a session with the second service terminal through the server 104). In this case, the second service terminal that performs the session with the data encryption terminal corresponding to the encryption service object may be considered as a new first service terminal, and the session performed by the data encryption terminal with the new first service terminal is considered as a new session. In this way, when the new first service terminal receives another piece of encrypted session data transmitted by the data encryption terminal for the new session, according to the foregoing data processing solution, private key components (to be specific, the first private key component and the second private key component) stored on different service terminals may still be selected to implement collaborative decryption on the new encrypted session data. The new encrypted session data is obtained by performing, based on the foregoing collaborative public key, encryption processing (namely, data encryption) on another piece of session service data generated in the new session.

The encryption service object may be a service object configured to directly perform data encryption on session service data generated in a session to obtain encrypted session data. In addition, in some embodiments, in some implementations, the encryption service object in this embodiment of this application may alternatively be a service object that needs to perform data decryption on currently obtained session service data (for example, service data that has been encrypted by another service object). In this case, before obtaining encrypted session data through encryption, the encryption service object needs to perform data decryption processing on the currently obtained encrypted service data. Further, when service data obtained through decryption needs to be transmitted to a service object (namely, the first service object), the service data obtained through decryption is used as session service data, and data encryption is re-performed, by using a collaborative public key indicated in a data encryption mode in this application, on the service data obtained through decryption, to obtain encrypted session data. This means that the encrypted service data in this embodiment of this application may alternatively be obtained by a service terminal on which another service object (namely, another encryption service object) is located by encrypting service data in another data encryption mode. For example, the another data encryption mode may include, but is not limited to, a symmetrical encryption mode in which a same key is used for encryption and decryption.

In some embodiments, the encryption service object may alternatively be a service object configured to perform data encryption and data decryption. In this case, the encryption service object may be a service object in the foregoing collaborative decryption object. For example, during a two-party collaborative decryption process indicated in the foregoing data processing solution, if an encryption service object performs a session with a first service object, the encryption service object may be a second service object. To be specific, in this case, the second service object may be a service object configured to perform data encryption and transmit encrypted session data, and may also be a service object in a collaborative decryption object configured to participate in two-party collaborative decryption. Correspondingly, in this case, a second service terminal corresponding to the second service object may serve as a data decryption terminal, and may also serve as a data encryption terminal.

The session service data in this embodiment of this application may be the foregoing encrypted service data (to be specific, encrypted service data that is obtained by another encryption means). Alternatively, the session service data may be plaintext service data displayed in a plaintext form.

Based on the foregoing data processing system, embodiments of this application provide a data processing solution. The data processing solution may be applied to an application scenario of multi-party (for example, two-party) collaborative decryption, or the data processing solution may be applied to e-commerce, cloud computing, the Internet of Things, a blockchain, or other application scenarios. Correspondingly, when the data processing solution is applied to different application scenarios, the session service data includes different data. For example, when the data processing solution is applied to an e-commerce scenario, the session service data may include order information, electronic invoice information, or the like in e-commerce; when the data processing solution is applied to a cloud computing scenario, the session service data may include picture data, identity information of an object, or the like stored in a cloud; or when the data processing solution is applied to an Internet of Things scenario, the session service data may include access control data, vehicle traveling data, or the like.

In the embodiments of this application, during obtaining of data such as order information of a service object (namely, a user), purchase information (for example, a product model, an amount of money, or an address of the service object) of the service object purchasing a product, access control information of the service object, and identity information of the object, a prompt interface or a pop-up window may be provided. The prompt interface or the pop-up window is configured for notifying the user that the data, such as the order information of the service object, the purchase information of the service object purchasing the product, the access control information of the service object, and the identity information of the object, is currently being collected. An operation related to data obtaining starts to be performed only after a confirmation operation performed by the service object on the prompt interface or the pop-up window is obtained; otherwise, the process ends.

All data (such as the order information of the service object, the purchase information of the service object purchasing the product, the access control information of the service object, and the identity information of the object) collected or obtained in the embodiments of this application is collected or obtained with consent and authorization by a corresponding service object (for example, the foregoing first service object). In other words, when the embodiments of this application are applied to a specific product or technology, permission or consent of a user needs to be obtained, and collection, use, and processing of related data need to comply with related laws, regulations, and standards of related countries and regions.

An example in which a data encryption terminal obtains purchase information of a first service object purchasing a product is used. When the data encryption terminal intends to obtain purchase information of the first service object purchasing a target product, an authorization interface is displayed on a first service terminal corresponding to the first service object. The authorization interface includes first prompt information, a confirmation button, and a cancel button. The first prompt information is configured for notifying an encryption service object that the purchase information of the target product needs to be obtained. If the first service object allows the data encryption terminal to obtain the purchase information of the target product, the confirmation button may be triggered, to implement data obtaining authorization for the data encryption terminal, and then the data encryption terminal may obtain the purchase information of the target product. If the first service object does not allow the data encryption terminal to obtain the purchase information of the target product, the cancel button may be triggered. In this case, the data encryption terminal cannot obtain the purchase information of the target product.

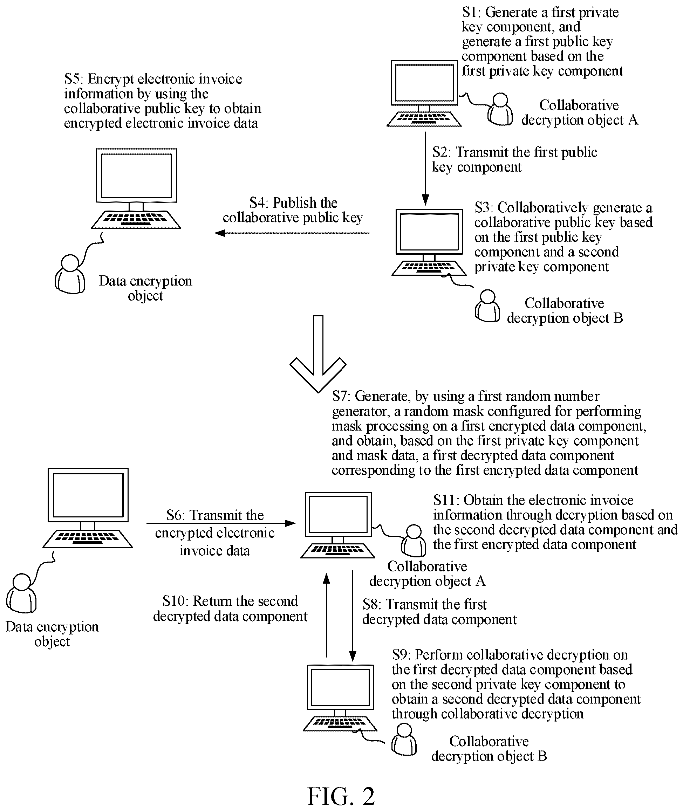

For ease of understanding, further, refer to FIG. 2. FIG. 2 is a schematic flowchart in which a collaborative decryption solution is applied to an invoicing scenario in e-commerce according to an embodiment of this application. In the invoicing scenario in e-commerce, session service data may be electronic invoice information in an electronic invoice, and encrypted session data may be encrypted electronic invoice data. The electronic invoice information may include, but is not limited to, the following information: an invoice number, an invoice date, purchaser information, seller information, an item name, a specification/model, a unit, a quantity, a unit price, an amount of money, and the like. An encryption service object may be a data encryption object in FIG. 2. The encryption service object may be a drawer (namely, a product seller) of an electronic invoice, and a first service object may be a product purchaser requesting to issue an electronic invoice. As shown in FIG. 2, collaborative decryption objects participating in collaborative decryption specifically include a collaborative decryption object A and a collaborative decryption object B shown in FIG. 2. In FIG. 2, the collaborative decryption object A may be the first service object requesting the encryption service object to issue an electronic invoice in the invoicing scenario, and the collaborative decryption object B may be a second service object that can assist the collaborative decryption object A in implementing collaborative decryption. In the entire invoicing scenario in e-commerce, the data processing solution in the embodiments of this application may specifically include three processes: a public key generation process, a data encryption process, and a collaborative decryption process.

The public key generation process may include the following operation S1 to operation S4. Specifically, refer to FIG. 2. Operation S1: A service terminal (namely, a first service terminal) corresponding to the collaborative decryption object A may pre-generate a first private key component for the collaborative decryption object A, and may generate a first public key component of the collaborative decryption object A based on the first private key component. Operation S2: Transmit the first public key component to a second service terminal corresponding to the collaborative decryption object B (specifically, the first service terminal may first transmit the first public key component to a server, and then the server transmits the first public key component to the second service terminal). Operation S3: The second service terminal may collaboratively generate a collaborative public key based on the first public key component and a second private key component stored on the second service terminal. Operation S4: The second service terminal may publish the collaborative public key to a data encryption terminal configured to perform data encryption.

In an example, in this embodiment of this application, when collaboratively generating a collaborative public key associated with a collaborative decryption object (for example, the collaborative decryption object A and the collaborative decryption object B shown in FIG. 2) together with the first service terminal, the second service terminal may further publish and upload the collaborative public key to the server (for example, the server 104), so that the server (for example, the server 104) can store an association relationship between the collaborative public key and the collaborative decryption object (for example, the collaborative decryption object A and the collaborative decryption object B shown in FIG. 2). In this way, subsequently, when performing a session with any service object in the collaborative decryption object, the data encryption terminal configured to perform data encryption may obtain, from the server, the collaborative public key having the association relationship with the collaborative decryption object (namely, the foregoing two-party collaborative decryption object, for example, the collaborative decryption object A and the collaborative decryption object B shown in FIG. 2) for data encryption.

In this embodiment of this application, before obtaining the first public key component, the second service terminal may pre-generate the second private key component for the collaborative decryption object B. In this way, the second service terminal can quickly perform operation S3 shown in FIG. 2 when receiving the first public key component transmitted by the first service terminal. In an example, in this embodiment of this application, the second service terminal may alternatively generate the second private key component for the collaborative decryption object B in real time when receiving the first public key component transmitted by the first service terminal, to further perform operation S2 shown in FIG. 2.

The data encryption process includes the following operations: Operation S5: The first service terminal (namely, the service terminal 101) may establish a session with a data encryption terminal (for example, the service terminal 103) corresponding to the data encryption object, and transmit, based on the session, an invoicing request to the data encryption terminal corresponding to the data encryption object. The invoicing request is configured for requesting the data encryption object to issue an electronic invoice about purchase of a target product. To be specific, when the first service terminal transmits the invoicing request to the server 104, the server 104 forwards the invoicing request to the data encryption terminal. Then, after receiving the invoicing request, the data encryption terminal may generate electronic invoice information of the electronic invoice based on purchase information associated with the target product, and perform encryption processing (namely, data encryption) on the electronic invoice information by using the collaborative public key to obtain encrypted electronic invoice data. Operation S6: The data encryption terminal transmits the encrypted electronic invoice data to the first service terminal (to be specific, transmits the encrypted electronic invoice data to the first service terminal through the server 104).

When the collaborative decryption object A serves as the first service object and performs a session with the data encryption object, the data encryption terminal corresponding to the data encryption object may obtain a collaborative public key associated with the collaborative decryption object A. In this way, when the data encryption terminal issues an electronic invoice for the collaborative decryption object A in response to the invoicing request, electronic invoice information of the electronic invoice may be used as session service data. Based on this, to ensure security and reliability of the electronic invoice information (namely, the session service data) in the transmitted electronic invoice, the data encryption terminal may perform data encryption on the electronic invoice information by using a currently obtained collaborative public key, and transmit encrypted electronic invoice data obtained through encryption to the collaborative decryption object A as encrypted session data, so that the collaborative decryption object A can implement collaborative decryption on the encrypted session data through the following collaborative decryption process.

The collaborative decryption process includes the following operation S7 to operation S11. Details are as follows: Operation S7: After receiving the encrypted electronic invoice data, the first service terminal may obtain a first encrypted data component from the encrypted electronic invoice data, and then may generate, by using a first random number generator, a random mask configured for performing mask processing on the first encrypted data component, and may obtain a first decrypted data component corresponding to the first encrypted data component based on the first private key component and mask data. Operation S8: The first service object may transmit the first decrypted data component to the second service terminal corresponding to the collaborative decryption object B. Operation S9: The second service terminal performs collaborative decryption on the first decrypted data component based on the second private key component of the second service terminal to obtain a second decrypted data component through collaborative decryption. Operation S10: The second service terminal may transmit the second decrypted data component to the first service terminal. S11: The first service terminal may obtain the electronic invoice information through decryption based on the second decrypted data component and the first encrypted data component.

In an example, in an invoicing scenario of an electronic invoice, to further ensure security of electronic invoice information transmitted by the data encryption terminal, in this embodiment of this application, when a trusted environment (for example, a trusted execution environment (TEE)) is run on both the data encryption terminal and the first service terminal, trusted encryption is pre-performed, through a trusted application in the trusted environment (namely, the TEE) on the data encryption terminal, on electronic invoice information that needs to be transmitted, and then electronic invoice information obtained through trusted encryption may be used as session service data on which data encryption needs to be further performed.

In this case, for the data encryption terminal, the session service data may be pre-encrypted electronic invoice information. To be specific, the electronic invoice information may be pre-encrypted in a trusted environment (TEE) on the data encryption terminal to obtain encrypted electronic invoice information. Then the encryption service object may further perform encryption processing on the encrypted electronic invoice information by using a currently obtained collaborative public key to obtain encrypted electronic invoice data. In this way, the first service terminal may perform decryption according to the foregoing collaborative decryption process to obtain the encrypted electronic invoice information. In this case, after the first service terminal obtains the encrypted electronic invoice information, a trusted application deployed in a trusted environment on the first service terminal may further perform decryption processing on the currently obtained encrypted electronic invoice information, to securely and reliably obtain the electronic invoice information through decryption in the trusted environment on the first service terminal.

The trusted application deployed in the trusted environment on the first service terminal and the trusted application deployed in the trusted environment on the data encryption terminal may agree upon a corresponding encryption public key and decryption private key. In this way, after obtaining electronic invoice information encrypted by using the agreed-upon encryption public key, the first service terminal can quickly perform decryption processing on the encrypted electronic invoice information based on the agreed-upon decryption private key, to obtain electronic invoice information through decryption.

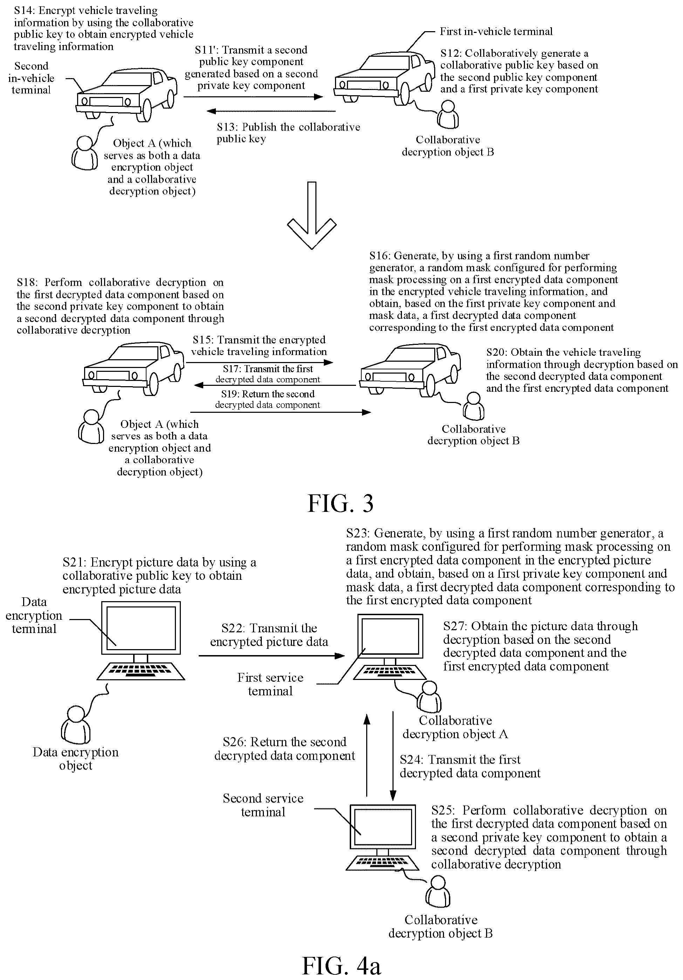

FIG. 3 is a schematic diagram in which a collaborative decryption solution is applied to an Internet of Things scenario according to an embodiment of this application. In the Internet of Things scenario, for example, session service data may be vehicle traveling information, and correspondingly, encrypted session data may be encrypted vehicle traveling information. A first service object and a second service object in a collaborative decryption object may be vehicle users. The first service object is a collaborative decryption object B in FIG. 3. A first service terminal corresponding to the first service object may be a first in-vehicle terminal shown in FIG. 3. The first in-vehicle terminal serves as a service terminal (namely, a data decryption terminal) participating in collaborative decryption. In addition, the second service object may be an object A in FIG. 3. The object A serves as both a data encryption object and a collaborative decryption object. Correspondingly, a second service terminal corresponding to the second service object may be a second in-vehicle terminal shown in FIG. 3. The second in-vehicle terminal may serve as both a data encryption terminal and another service terminal (namely, another data decryption terminal) that can participate in the collaborative decryption.

In this case, for ease of understanding, a specific process of performing data encryption and data decryption between the first service terminal corresponding to the first service object and the second service terminal corresponding to the second service object is described by using an example in which an encryption service object is the second service object.

Specifically, refer to FIG. 3. Operation S11': The second in-vehicle terminal (namely, the second service terminal) corresponding to the object A (namely, the second service object) may pre-generate a second private key component of the object A, and may generate a second public key component of the object A based on the second private key component. Then the second in-vehicle terminal (namely, the second service terminal) corresponding to the object A (namely, the second service object) may transmit the second public key component to the first in-vehicle terminal corresponding to the collaborative decryption object B (to be specific, the second in-vehicle terminal transmits the second public key component to a server, and the server transmits the second public key component to the first in-vehicle terminal).

Further, the following operation is performed: Operation S12: The first in-vehicle terminal (namely, the first service terminal) collaboratively generates a collaborative public key based on the second public key component and a first private key component stored on the first in-vehicle terminal. Similarly, in this embodiment of this application, before obtaining the second public key component of the object A, the first in-vehicle terminal (namely, the first service terminal) may alternatively pre-generate the first private key component for the collaborative decryption object B. In this way, the first in-vehicle terminal (namely, the first service terminal) can quickly perform operation S12 shown in FIG. 3 when receiving the second public key component transmitted by the second in-vehicle terminal (namely, the second service terminal). In an example, in this embodiment of this application, the first in-vehicle terminal (namely, the first service terminal) may alternatively generate the first private key component for the collaborative decryption object B in real time when receiving the second public key component transmitted by the second in-vehicle terminal (namely, the second service terminal), to further perform operation S12 shown in FIG. 3.

Refer to FIG. 3. Operation S13: The first in-vehicle terminal may publish the collaborative public key to the second in-vehicle terminal. Specifically, the first in-vehicle terminal may publish the collaborative public key to the second in-vehicle terminal through the server. For example, when collaboratively generating a collaborative public key associated with a collaborative decryption object (for example, the object A and the collaborative decryption object B shown in FIG. 3) together with the first in-vehicle terminal, the second in-vehicle terminal may further publish and upload the collaborative public key to the server (for example, the server 104), so that the server (for example, the server 104) can store an association relationship between the collaborative public key and the collaborative decryption object (for example, the object A and the collaborative decryption object B shown in FIG. 3). In this way, subsequently, when a data encryption terminal configured to perform data encryption is the second in-vehicle terminal, the second in-vehicle terminal may obtain, from the server (for example, the server 104), the collaborative public key having the association relationship with the collaborative decryption object (for example, the object A and the collaborative decryption object B shown in FIG. 3) for data encryption. Further, the following operation is performed: Operation S14: When the object A intends to share vehicle traveling information with the collaborative decryption object B, the second in-vehicle terminal may perform encryption processing on the to-be-shared vehicle traveling information by using the collaborative public key when obtaining the collaborative public key, to obtain encrypted vehicle traveling information through encryption. Operation S15: The second in-vehicle terminal may further transmit the encrypted vehicle traveling information to the first in-vehicle terminal corresponding to the collaborative decryption object B. Specifically, when establishing a session with the first in-vehicle terminal through the server, the second in-vehicle terminal may transmit the encrypted vehicle traveling information to the server, and the server forwards the encrypted vehicle traveling information to the first in-vehicle terminal.

Refer to FIG. 3. Operation S16: After receiving the encrypted vehicle traveling information, the first in-vehicle terminal may obtain a first encrypted data component from the encrypted vehicle traveling information, and then may generate, by using a first random number generator, a random mask configured for performing mask processing on the first encrypted data component in the encrypted vehicle traveling information, and may obtain a first decrypted data component corresponding to the first encrypted data component based on the first private key component and mask data. Operation S17: The first in-vehicle terminal may further transmit the first decrypted data component to the second in-vehicle terminal. In this way, the following operation is performed: Operation S18: The second in-vehicle terminal may perform collaborative decryption on the first decrypted data component based on the second private key component of the second in-vehicle terminal to obtain a second decrypted data component through collaborative decryption. Operation S19: The second in-vehicle terminal may transmit (namely, return) the second decrypted data component to the first in-vehicle terminal. Operation S20: The first in-vehicle terminal may obtain the vehicle traveling information through decryption based on the second decrypted data component and the first encrypted data component. In this embodiment of this application, two service objects participating in two-party collaborative decryption may independently generate their own private key components, and then generate the foregoing collaborative public key through a collaborative operation. This means that neither of the two service objects participating in the two-party collaborative decryption can independently obtain a complete private key through calculation by using their currently stored private key components. In this way, even if a private key component of one of the two service objects is leaked, an unauthorized object cannot independently perform decryption by using the private key component obtained without authorization. This can ensure security of vehicle traveling information shared during a communication process to some extent.

FIG. 4a is a schematic diagram in which a collaborative decryption solution is applied to a cloud computing scenario according to an embodiment of this application. In the cloud computing scenario, session service data may be picture data stored in a cloud. An encryption service object may be a service object that encrypts the picture data. The encryption service object may be a data encryption object shown in FIG. 4a. A service terminal corresponding to the encryption service object (for example, the data encryption object shown in FIG. 4a) is a data encryption terminal.

As shown in FIG. 4a, a collaborative decryption object participating in collaborative decryption is a service object that can perform collaborative decryption on encrypted picture data. A collaborative decryption object A in FIG. 4a is a first service object in the collaborative decryption object, and a collaborative decryption object B in FIG. 4a is a second service object in the collaborative decryption object. As shown in FIG. 4a, a service terminal corresponding to the first service object is a first service terminal, and a service terminal corresponding to the second service object is a second service terminal. Both the first service terminal and the second service terminal herein are collaborative decryption terminals (namely, the foregoing data decryption terminal).

As shown in FIG. 4a, an entire collaborative decryption process in the cloud computing scenario includes the following operations: Operation S21: When obtaining a collaborative public key (for example, obtaining a collaborative public key associated with the collaborative decryption object A and the collaborative decryption object B from a server), the data encryption terminal may encrypt, by using the collaborative public key, the picture data obtained from the cloud, to obtain the encrypted picture data. Operation S22: When the first service terminal establishes a session with the data encryption terminal corresponding to the encryption service object (to be specific, the first service terminal establishes the session with the data encryption terminal through the server 104), the data encryption terminal may transmit the encrypted picture data to the first service terminal corresponding to the collaborative decryption object A. Specifically, the data encryption terminal transmits the encrypted picture data to the server 104, and the server 104 transmits the encrypted picture data to the first service terminal. Operation S23: After receiving the encrypted picture data, the first service terminal may generate, by using a first random number generator, a random mask configured for performing mask processing on a first encrypted data component in the encrypted picture data, and obtain, based on a first private key component and mask data, a first decrypted data component corresponding to the first encrypted data component. Operation S24: The first service terminal may further transmit the first decrypted data component to the second service terminal corresponding to the collaborative decryption object B. Operation S25: The second service terminal may perform collaborative decryption on the first decrypted data component based on a second private key component of the second service terminal to obtain a second decrypted data component through collaborative decryption. Operation S26: Further, the second service terminal may transmit (namely, return) the second decrypted data component to the first service terminal. In this way, the following operation is performed: Operation S27: The first service terminal may obtain the picture data through decryption based on the second decrypted data component and the first encrypted data component.

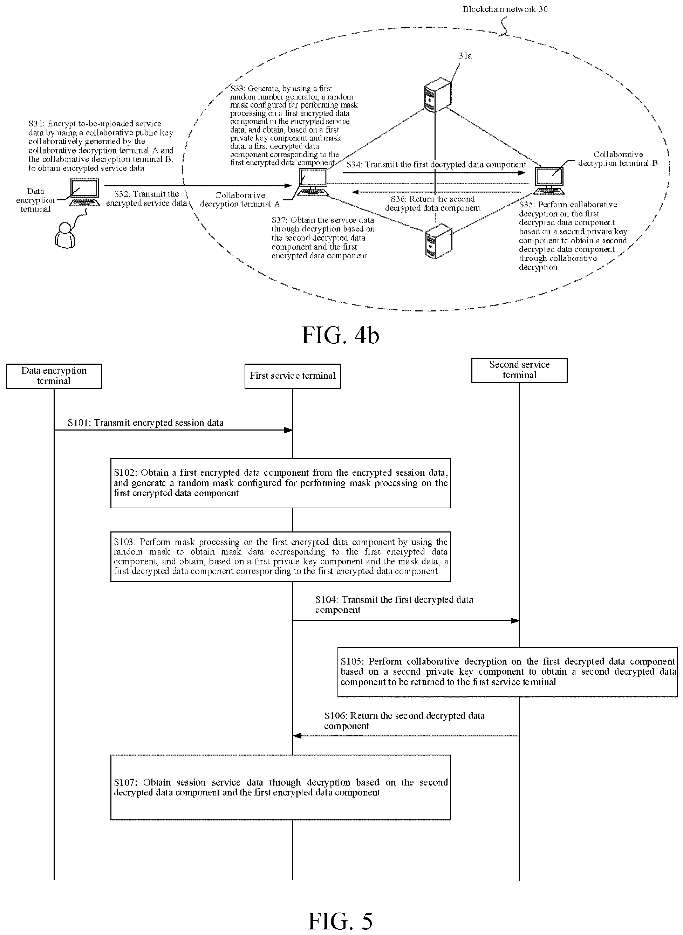

The data processing solution provided in the embodiments of this application may alternatively be applied to a blockchain scenario. Further, FIG. 4b is a schematic diagram in which a data processing solution is applied to a blockchain scenario according to an embodiment of this application. In FIG. 4b, session service data may be to-be-uploaded service data, and encrypted session data may be encrypted service data. An encryption service object herein may be a service object requesting to upload the service data to a blockchain. A data encryption terminal corresponding to the encryption service object may be a data encryption terminal shown in FIG. 4b. A first service terminal corresponding to a first service object may be a collaborative decryption terminal A in FIG. 4b. A second service terminal corresponding to a second service object may be a collaborative decryption terminal B in FIG. 4b. The collaborative decryption terminal A and the collaborative decryption terminal B are two nodes (namely, two blockchain nodes) in a blockchain network 30.

An entire collaborative decryption process in the blockchain network scenario may include the following operations: Refer to FIG. 4b. Operation S31: The data encryption terminal may encrypt to-be-uploaded service data by using a collaborative public key collaboratively generated by the collaborative decryption terminal A and the collaborative decryption terminal B, to obtain encrypted service data. Further, the following operation is performed: Operation S32: The data encryption terminal may transmit the encrypted service data to a node (for example, the collaborative decryption terminal A shown in FIG. 4b) in the blockchain network 30, to ensure security and reliability of service data that can be finally uploaded to the blockchain. In this way, the following operation is performed: Operation S33: When receiving the encrypted service data, the collaborative decryption terminal A in the blockchain network may generate, by using a first random number generator, a random mask configured for performing mask processing on a first encrypted data component in the encrypted service data, and may obtain, based on a first private key component and mask data, a first decrypted data component corresponding to the first encrypted data component. Further, the following operation is performed: Operation S34: The collaborative decryption terminal A may transmit the first decrypted data component to the collaborative decryption terminal B. Operation S35: After receiving the first decrypted data component, the collaborative decryption terminal B may perform collaborative decryption on the first decrypted data component based on a second private key component of the collaborative decryption terminal B to obtain a second decrypted data component through collaborative decryption. Further, the following operation is performed: Operation S36: The collaborative decryption terminal B may transmit (namely, return) the second decrypted data component to the first service terminal. In this way, the following operation is performed: Operation S37: The collaborative decryption terminal A may obtain the service data through decryption based on the second decrypted data component and the first encrypted data component. Then the collaborative decryption terminal A may broadcast the service data obtained through decryption in the entire blockchain network (for example, the blockchain network 30 shown in FIG. 4b), to transmit the service data obtained through decryption to other nodes in the blockchain network 30 to achieve consensus. In addition, after consensus is achieved, the service data is uploaded and stored to the blockchain maintained by the blockchain network 30.

When the data encryption terminal intends to perform a session with a node 31a in the blockchain network 30, the data encryption terminal may encrypt, by using the collaborative public key collaboratively generated by the collaborative decryption terminal A and the collaborative decryption terminal B, service data that needs to be uploaded to the blockchain, to obtain encrypted service data. Then the data encryption terminal transmits the encrypted service data to the node 31a in the blockchain network 30. In this way, after receiving the encrypted service data, the node 31a may determine, based on a collaborative decryption object that is associated with the collaborative public key and that is stored in the blockchain, the collaborative decryption terminal A corresponding to the first service object and the collaborative decryption terminal B corresponding to the second service object. Then the node 31a may transmit the encrypted service data to the collaborative decryption terminal A in the blockchain network 30. In this way, the collaborative decryption terminal A may further generate, by using the first random number generator, a random mask configured for performing mask processing on a first encrypted data component in the encrypted service data, and obtain, based on the first private key component and mask data, a first decrypted data component corresponding to the first encrypted data component. Further, the collaborative decryption terminal A may transmit the first decrypted data component to the collaborative decryption terminal B, so that the collaborative decryption terminal B performs collaborative decryption on the first decrypted data component based on the second private key component of the collaborative decryption terminal B to obtain a second decrypted data component through collaborative decryption, and transmits (namely, returns) the second decrypted data component to the first service terminal. Then the collaborative decryption terminal A may obtain the service data through decryption based on the second decrypted data component and the first encrypted data component, and transmit the service data obtained through decryption to the node 31a, so that the node 31a may subsequently broadcast the service data obtained through decryption in the entire blockchain network 30a. The data encryption terminal encrypts the service data by using the collaborative public key, so that security of the service data during the session process can be ensured. In addition, the node 31a transmits the encrypted service data to other nodes (to be specific, the collaborative decryption terminal A and the collaborative decryption terminal B) in the blockchain network for collaborative decryption, so that service data that can be uploaded to the blockchain can be securely and reliably obtained without affecting processing of other tasks (for example, a data upload task or a data query task) on the node.

For specific implementation processes of generating the collaborative public key based on the first private key component and the second private key component and performing collaborative decryption on the encrypted session data by the first service terminal and the second service terminal, refer to descriptions of embodiments corresponding to FIG. 5 to FIG. 9.

FIG. 5 is a schematic flowchart of a data processing method according to an embodiment of this application. The data processing method may be jointly performed by a first service terminal (namely, the service terminal 101 in FIG. 1) and a second service terminal (namely, the service terminal 102 in FIG. 1) in the foregoing system. The first service terminal and the second service terminal herein may be included in a plurality of service terminals configured to participate in collaborative decryption. The first service terminal stores a first private key component pre-generated for a first service object. The second service terminal stores a second private key component pre-generated for a second service object. The first private key component and the second private key component are configured for collaboratively generating a collaborative public key that is to be used for data encryption. Both the first service object and the second service object are service objects participating in data decryption. As shown in FIG. 5, the data processing method may include at least the following operations S101 to S107.

Operation S101: The first service terminal may receive encrypted session data transmitted by a data encryption terminal corresponding to an encryption service object.

In this embodiment of this application, the encryption service object is a service object that performs data encryption on to-be-transmitted session service data. The encrypted session data herein is obtained by the data encryption terminal by performing data encryption on the session service data by using a collaborative public key.

In this embodiment of this application, the first service terminal herein may be a service terminal that can be configured to directly exchange data with the data encryption terminal. For example, when the first service object performs a session with the encryption service object through the first service terminal (to be specific, the first service terminal establishes a session connection, for example, a session connection 1, to the data encryption terminal), the first service terminal may receive, based on the session connection 1, encrypted session data that is transmitted by the data encryption terminal corresponding to the encryption service object for the session.

In some embodiments, in some other implementations, the first service terminal herein may alternatively be a service terminal that can be configured to indirectly exchange data with the data encryption terminal. For example, in the foregoing blockchain scenario, when a first service terminal performs a session with a data upload node, the first service terminal may receive encrypted session data that is transmitted by a data encryption terminal and that is obtained by the data upload node. In other words, in this embodiment of this application, the first service terminal may receive encrypted session data forwarded by another node (namely, a data upload node, for example, the node 31a) in a blockchain network (for example, the blockchain network 30). This means that when the data encryption terminal performs a session with the another node (namely, the data upload node, for example, the node 31a) (to be specific, the node 31a establishes a session connection, for example, a session connection 2, to the data encryption terminal), the another node (namely, the data upload node, for example, the node 31a) may receive, based on the session connection 2, encrypted session data transmitted by the data encryption terminal for another session. Further, without affecting normal execution of a data upload task or a data query task of the data upload node, the data upload node may determine, in the blockchain based on a collaborative public key corresponding to the obtained encrypted session data, a first service terminal and a second service terminal that are associated with the collaborative public key, and then may forward the encrypted session data to the first service terminal, so that the first service terminal and the second service terminal may subsequently collaboratively implement collaborative decryption on the encrypted session data.

For ease of understanding, a specific process of collaboratively implementing data decryption on the encrypted session data by the first service terminal and the second service terminal is subsequently described by using an example in which the first service terminal directly receives the encrypted session data transmitted by the data encryption terminal. For example, the first service object may perform, through the first service terminal, a session with the data encryption terminal corresponding to the encryption service object. The first service object herein may be one of a plurality of service objects (namely, a collaborative decryption object) configured to perform data decryption, and the first service object is a service object that can extract a first encrypted data component from currently obtained encrypted session data. In this case, a service terminal corresponding to the first service object may serve as the first service terminal. The encryption service object may be a service object configured to perform data encryption on to-be-transmitted service data (for example, session service data). In this case, a service terminal corresponding to the encryption service object is the data encryption terminal.

In this embodiment of this application, the collaborative decryption object herein may specifically include the first service object and the second service object. To be specific, both the first service object and the second service object are service objects participating in data decryption. Correspondingly, both the first service terminal corresponding to the first service object and the second service terminal corresponding to the second service object may be collectively referred to as a collaborative decryption terminal corresponding to the collaborative decryption object.

The encryption service object may be any service object that needs to perform data encryption on session service data in a corresponding application scenario. For example, the encryption service object may be any service object that needs to perform a session with the first service object and that needs to perform data encryption. For example, in a corresponding application scenario, the encryption service object herein may be the second service object and/or a service object other than the first service object and the second service object.

In this embodiment of this application, the first service object and the second service object may be service objects configured to perform data decryption, or the first service object and the second service object herein may be service objects configured to perform data encryption (that is, the foregoing encryption service object). This is not limited in this embodiment of the application.

The session service data may be determined based on different application scenarios. For example, when an application scenario is the foregoing cloud computing scenario, the session service data may include picture data obtained by an encryption service object from a cloud. For another example, when an application scenario is the foregoing e-commerce scenario, the session service data may include electronic invoice information, order information, or the like.

The encrypted session data is obtained by the data encryption terminal by encrypting the session service data by using a collaborative public key associated with the collaborative decryption object. For example, in an application scenario of two-party collaborative decryption, the collaborative public key associated with the collaborative decryption object (for example, the foregoing two-party collaborative decryption object) may be specifically a collaborative public key associated with the first service object and the second service object, or a collaborative public key associated with the first service terminal corresponding to the first service object and the second service terminal corresponding to the second service object. The collaborative public key herein is collaboratively generated based on the first private key component of the first service object in the collaborative decryption object and the second private key component of the second service object in the collaborative decryption object. This means that, in this embodiment of this application, the first private key component of the first service object that is stored on the first service terminal and the second private key component of the second service object that is stored on the second service terminal may be configured for collaboratively generating the collaborative public key.

In this embodiment of this application, the encrypted session data may specifically include the following encrypted data components: a first encrypted data component, a second encrypted data component, and a third encrypted data component. In a data encryption process, the first encrypted data component is an elliptic curve point that is obtained by performing, according to a collaborative encryption policy in the data processing solution in the embodiments of this application, a multiple operation on a base point (for example, G) on a collaborative elliptic curve used for data encryption. Therefore, in a collaborative decryption process, when the first service terminal corresponding to the first service object obtains the first encrypted data component from the encrypted session data, whether the first encrypted data component herein is an elliptic curve point on a collaborative elliptic curve used for data decryption may be determined. If yes, the first encrypted data component herein may be specifically an encrypted data component that meets a collaborative decryption policy and that is determined by the first service terminal. The collaborative decryption policy includes the collaborative elliptic curve used for data decryption. In this embodiment of this application, the collaborative elliptic curve used for data encryption and the collaborative elliptic curve used for data decryption are a same elliptic curve that meets an asymmetric encryption algorithm.

In the data encryption process, the second encrypted data component is ciphertext data that is obtained according to the collaborative encryption policy and whose length is equal to a data length (for example, M, M being a positive integer greater than 1) of the session service data. The ciphertext data herein is essentially a bit string whose data length is M. In this embodiment of this application, a key data stream that is generated based on a key derivation function (KDF) in the collaborative encryption policy and whose length is equal to the data length (for example, M, M being a positive integer greater than 1) of the session service data may be collectively referred to as an encryption derivation bit string. The encryption derivation bit string is a bit string whose data length is M. For example, when the data length is a bit length, the bit string whose bit length is M may be denoted as a bit string t. Further, in this embodiment of this application, an exclusive OR operation may be performed on the bit string t and the session service data whose data length is M, and then an operation result obtained through the exclusive OR operation may be used as the second encrypted data component. Therefore, in the collaborative decryption process, when the first service terminal corresponding to the first service object obtains the second encrypted data component from the encrypted session data, another key data stream that is generated based on a KDF in the collaborative decryption policy and whose length is equal to a data length (for example, klen, klen being a positive integer greater than 1, for example, klen may be equal to M) of the second encrypted data component may be collectively referred to as a key derivation bit string. The key derivation bit string is a bit string whose data length is klen. For example, when the data length is a bit length, the key derivation bit string (namely, the bit string whose bit length is klen) may be a bit string t'. Then whether the key derivation bit string obtained through decryption meets a decryption condition in the collaborative decryption policy may be determined. If the decryption condition is met, an exclusive OR operation may be performed on the key derivation bit string and the second encrypted data component, and then an operation result obtained through the exclusive OR operation may be used as session service data obtained through decryption. In the collaborative decryption process, the second encrypted data component is an encrypted data component that is determined by the first service terminal and that is configured for performing collaborative decryption together with a decryption elliptic curve point on the collaborative elliptic curve to obtain the session service data. The decryption elliptic curve point is determined based on a second decrypted data component and the first encrypted data component.

In the data encryption process, the third encrypted data component is a digest value obtained by performing hash calculation on the session service data (in other words, the third encrypted data component may be an encrypted data component related to the digest value of the session service data). Therefore, in a data decryption process, the third encrypted data component is an encrypted data component configured for checking correctness of the session service data obtained through collaborative decryption. In this case, the third encrypted data component may be specifically a data check value configured for performing data check on the session service data obtained through collaborative decryption. For example, whether the third encrypted data component is consistent with another digest value obtained by performing hash calculation on the session service data obtained through decryption may be determined. If the third encrypted data component is consistent with the another digest value, it can be determined that the session service data obtained through decryption in the collaborative decryption mode in this embodiment of this application is correct.

The encrypted session data may be denoted as C, the first encrypted data component may be denoted as C1, the second encrypted data component may be denoted as C2, and the third encrypted data component may be denoted as C3. The first encrypted data component includes an elliptic curve point on a collaborative elliptic curve that is used for data encryption and that is obtained according to the foregoing collaborative encryption policy. The second encrypted data component includes ciphertext data corresponding to the session service data. The third encrypted data component includes a digest value associated with the session service data. In this case, the encrypted session data may be expressed as C=C1∥C2∥C3, where the symbol "∥" represents concatenation. The collaborative elliptic curve herein may be specifically an elliptic curve defined based on an asymmetric encryption algorithm (for example, an SM2 algorithm). In this embodiment of this application, the asymmetric encryption algorithm may include, but is not limited to, the SM2 algorithm, and for example, may further include an SM3 algorithm based on a hash operation. This is not limited herein.

Operation S102: The first service terminal may obtain the first encrypted data component from the encrypted session data, and generate a random mask configured for performing mask processing on the first encrypted data component.

Specifically, when obtaining the first encrypted data component from the encrypted session data, the first service terminal may determine whether the first encrypted data component meets a collaborative decryption policy corresponding to the foregoing collaborative encryption policy, and then may generate, by using a first random number generator, the random mask configured for performing mask processing on the first encrypted data component when determining that the first encrypted data component meets the collaborative decryption policy (in other words, when determining that the first encrypted data component is an encrypted data component meeting the collaborative decryption policy).

The collaborative decryption policy may include a collaborative elliptic curve used for data decryption. The collaborative elliptic curve in the collaborative decryption policy may be the same as the collaborative elliptic curve in the foregoing collaborative encryption policy. In this way, when obtaining the first encrypted data component from the encrypted session data, the first service terminal may verify whether the first encrypted data component meets the collaborative elliptic curve indicated by the collaborative decryption policy, to be specific, needs to determine whether the currently obtained first encrypted data component is an elliptic curve point on the collaborative elliptic curve. If yes, the first service terminal may determine that the currently obtained first encrypted data component meets the collaborative decryption policy, and then may generate, by using a random number generator (namely, the first random number generator) indicated by the collaborative decryption policy, the random mask configured for performing mask processing on the first encrypted data component. The first random number generator herein may be a random number that falls within a specified mask range (for example, [1, n-1]) and that is generated based on a condition indicated by the collaborative elliptic curve. Then the generated random number may be used as the random mask. For example, the random mask may be denoted as r, and the random mask r∈[1, n-1]. n herein is an elliptic curve parameter, agreed upon (namely, determined) based on an asymmetric encryption algorithm, of a collaborative elliptic curve in this embodiment of this application. The elliptic curve parameter may be an agreed-upon value that is agreed upon based on the asymmetric encryption algorithm. For example, the agreed-upon value herein may be an order of an agreed-upon base point on the collaborative elliptic curve. n herein may be represented by a number with a specified length, for example, may be represented by a hexadecimal number with a specified byte length or bit length. Conversion between a decimal number and a hexadecimal number may be performed herein according to a specific number system conversion rule. In this embodiment of this application, an elliptic curve (namely, the collaborative elliptic curve, where the collaborative elliptic curve herein may be specifically a finite-field elliptic curve) may be uniquely determined by using the elliptic curve parameter determined based on the asymmetric encryption algorithm. The elliptic curve parameter herein may include at least a base point (for example, a base point G) and an order. All other elliptic curve points on the finite-field elliptic curve may be calculated by performing a multiple operation (namely, a multiplication operation) on the base point G. Therefore, in this embodiment of this application, during the determining whether the first encrypted data component meets the collaborative decryption policy, whether a coordinate point indicated by the first encrypted data component is an elliptic curve point on the collaborative elliptic curve may be determined. If yes, it can be determined that the collaborative decryption policy is met; otherwise, it can be determined that the collaborative decryption policy is not met.

The first service terminal may extract the first encrypted data component from the encrypted session data, determine whether the first encrypted data component meets the collaborative decryption policy associated with the collaborative decryption object, and when the first encrypted data component meets the collaborative decryption policy associated with the collaborative decryption object, generate, by using the first random number generator, the random mask configured for performing mask processing on the first encrypted data component.

In an example, in this embodiment of this application, the first service terminal may alternatively report an error and exit the collaborative decryption process when the first encrypted data component does not meet the collaborative decryption policy associated with the collaborative decryption object.

A specific implementation of determining whether the first encrypted data component meets the collaborative decryption policy may be as follows: Whether the first encrypted data component meets an expression of the collaborative elliptic curve is verified. If it is verified that the first encrypted data component meets the expression of the collaborative elliptic curve, a collaborative elliptic curve point S may be further determined based on a cofactor (for example, the cofactor h is 1) and the first encrypted data component, and whether the collaborative elliptic curve point S is an infinity point O is further determined. If the collaborative elliptic curve point S is not the infinity point O, it can be determined that the first encrypted data component meets the collaborative decryption policy associated with the collaborative decryption object. To be specific, in this case, the first service terminal may further perform a multiple operation on the first encrypted data component by using a cofactor when determining that the first encrypted data component is an elliptic curve point on the collaborative elliptic curve. In this way, when it is determined that the collaborative elliptic curve point S obtained through the multiple operation is not the infinity point O, it can be indirectly determined that the collaborative elliptic curve point S obtained through the multiple operation is still an elliptic curve point on the collaborative elliptic curve.

Similarly, if the first encrypted data component does not meet the expression of the collaborative elliptic curve or the collaborative elliptic curve point S is the infinity point O beyond the collaborative elliptic curve, the first service terminal needs to report an error. For example, the first service terminal may output error information and exit the collaborative decryption process for the encrypted session data. In this embodiment of this application, an infinity point (for example, the infinity point O) is a coordinate point that is beyond the collaborative elliptic curve and that is determined according to the foregoing collaborative decryption policy.

If a data type of the first encrypted data component is a bit string, the first encrypted data component needs to be converted into an elliptic curve coordinate point corresponding to the first encrypted data component. Then whether the elliptic curve coordinate point corresponding to the first encrypted data component meets the expression of the collaborative elliptic curve is determined. If yes, it can be determined that the first encrypted data component is an elliptic curve point on the collaborative elliptic curve. A coordinate point of the elliptic curve point on the collaborative elliptic curve may be collectively referred to as the elliptic curve coordinate point.

After obtaining the random mask, the first service terminal may obtain the agreed-upon value (namely, n) associated with the random mask, and perform a modulo operation based on the random mask and the agreed-upon value to obtain a modulo value corresponding to the random mask. If the modulo value corresponding to the random mask is not equal to a preset mask value (the mask value herein is 1), mask processing may be performed on the first encrypted data component by using the random mask o obtain mask data, and operation S103 is performed. If the modulo value corresponding to the random mask is equal to the preset mask value, a new random mask configured for performing mask processing on the first encrypted data component is re-generated by using the first random number generator, and operation S103 may be further performed by using the re-generated new random mask.

The agreed-upon value may be a value agreed upon in the foregoing asymmetric encryption algorithm (for example, the SM2 algorithm), and a calculation formula for the modulo value corresponding to the random mask may be expressed as *r*⁻¹ mod n, where *r* represents the random mask, mod n represents a modulo operation on n, and n represents the agreed-upon value. For example, the mask value is 1. When *r*⁻¹ mod n is not equal to 1, the first service terminal may perform mask processing on the first encrypted data component by using the random mask to obtain mask data. When *r*⁻¹ mod n is equal to 1, a new random mask needs to be re-generated. For example, a random mask configured for performing mask processing on the first encrypted data component may be re-generated by using the first random number generator, and then a modulo operation may be re-performed on the new random mask and the agreed-upon value based on the foregoing modulo value calculation formula, to determine whether a newly obtained modulo value meets a modulo value calculation condition. The modulo value calculation condition herein means that whether a currently calculated modulo value is equal to the preset mask value whose value is 1 needs to be determined. If the currently calculated modulo value is equal to the preset mask value whose value is 1, it is determined that the modulo value calculation condition is not met. On the contrary, if the currently calculated modulo value is not equal to the preset mask value, it can be determined that the modulo value calculation condition is met. Then the first service terminal may be authorized to perform mask processing on the first encrypted data component by using the random mask to obtain mask data.

A manner of determining the mask data is as follows: R=[r]C1, where r represents the mask data, C1 represents the first encrypted data component, and [r]C1 represents mask processing. The mask processing herein is to perform a multiplication operation on the random mask and the first encrypted data component.

Operation S103: The first service terminal may perform mask processing on the first encrypted data component by using the random mask to obtain mask data corresponding to the first encrypted data component, and may obtain, based on the first private key component and the mask data, a first decrypted data component corresponding to the first encrypted data component.

In other words, when performing mask processing on the first encrypted data component by using the random mask to obtain the mask data, the first service terminal may further obtain, based on the first private key component and the mask data, the first decrypted data component corresponding to the first encrypted data component.

In this embodiment of this application, value ranges of both the first private key component (for example, d1) and the second private key component (for example, d2) are a preset private key value range, and the private key value range may be denoted as [2, n-1]. Values of the private key value range herein start from 2. This is to ensure that a denominator (namely, a divisor) of a modulo operation is not zero in a mathematical sense when modulo operations are separately performed on the first private key component and the second private key component based on another modulo value calculation formula (for example, (d1 - 1)⁻¹ mod n or (d2 - 1)⁻¹ mod n).

In addition, when collaborative decryption is subsequently performed by using the first private key component and the second private key component, fuzzy processing may alternatively be performed on the first private key component by using a first value whose value is 1, and then the first decrypted data component corresponding to the first encrypted data component may be calculated by using a fuzzy-processed first private key component. This can help reduce a risk of leakage of the first private key component of the first service object when the first service terminal subsequently transmits the first decrypted data component obtained through decryption to the second service terminal.

After obtaining the mask data, the first service terminal may further perform fuzzy processing on the first private key component (the fuzzy processing herein is to calculate a difference between the first private key component and the first value), and then may calculate, by using the fuzzy-processed first private key component, the first decrypted data component corresponding to the first encrypted data component. For example, the first service terminal may calculate the difference (namely, d1-1) between the first private key component (namely, d1) and the first value (to be specific, the first value is 1), and may perform multiplication processing on the difference (namely, d1-1) and the mask data to obtain the first decrypted data component corresponding to the first encrypted data component. A manner of calculating the first decrypted data component is as follows: T1=[d1-1]R, where T1 represents the first decrypted data component, d1 represents the first private key component, R represents the mask data, and [d1-1] represents the fuzzy-processed first private key component obtained by performing fuzzy processing on the first private key component of the first service object.

Operation S104: The first service terminal transmits the first decrypted data component to the second service terminal corresponding to the second service object.

Specifically, the first service terminal may establish a session connection to the second service terminal, and may further transmit the first decrypted data component to the second service terminal of the second service object based on the session connection.

In this embodiment of this application, during collaborative data decryption by the first service terminal and the second service terminal, the first service terminal needs to pre-perform mask processing (namely, multiplication processing) on the first encrypted data component by using the random mask to obtain the first decrypted data component (namely, T1) corresponding to the first encrypted data component. In other words, the first decrypted data component is a data component that is used for collaborative decryption and that is calculated by the first service terminal based on the random mask and the first encrypted data component. In this way, when establishing a session connection to the second service terminal, the first service terminal may transmit the first decrypted data component to the second service terminal based on the current session connection. In this way, the first service terminal does not directly transmit the first private key component of the first service terminal to the second service terminal, but transmits the first decrypted data component obtained through calculation by using the fuzzy-processed first private key component to the second service terminal. This means that the first service terminal cannot directly obtain complete session service data through calculation by using the first private key component of the first service terminal, but obtains, through calculation, the first decrypted data component configured for assisting in decryption. This not only can ensure security of the transmitted first decrypted data component by using the session connection, but also can avoid a risk of leakage of the first private key component in the first decrypted data component during a session process.

After receiving the first decrypted data component transmitted by the first service terminal, the second service terminal may determine whether the first decrypted data component meets the collaborative decryption policy. If it is determined that the first decrypted data component meets the collaborative decryption policy, operation S105 may be further performed. If it is determined that the first decrypted data component does not meet the collaborative decryption policy, error information (to be specific, second error information) is returned to the first service terminal. The second error information is configured for indicating that the currently obtained first decrypted data component is incorrect. After receiving the second error information, the first service terminal may exit the collaborative decryption process based on the second error information.

In an implementation, a specific process of determining, by the second service terminal, whether the first decrypted data component meets the collaborative decryption policy may include: When receiving the first decrypted data component, the second service terminal may determine whether the first decrypted data component meets the expression of the collaborative elliptic curve. If determining that the first decrypted data component meets the expression of the collaborative elliptic curve, the second service terminal further determines whether the first decrypted data component is an infinity point. If the second service terminal determines that the first decrypted data component is not an infinity point, the second service terminal may determine that the currently obtained first decrypted data component meets the collaborative decryption policy.

If determining that the first decrypted data component does not meet the expression of the collaborative elliptic curve, the second service terminal may determine that the first decrypted data component does not meet the collaborative decryption policy. Alternatively, if determining that the first decrypted data component is an infinity point beyond the collaborative elliptic curve, the second service terminal may also determine that the first decrypted data component does not meet the collaborative decryption policy.

Operation S105: The second service terminal may perform collaborative decryption on the first decrypted data component based on the second private key component to obtain a second decrypted data component to be returned to the first service terminal.

Specifically, the second service terminal may perform collaborative decryption on the first decrypted data component based on the second private key component in response to the collaborative decryption policy that is met by the first decrypted data component, to obtain the second decrypted data component through collaborative decryption. This means that the second service terminal may perform collaborative decryption on the first decrypted data component based on the second private key component when the first decrypted data component meets the collaborative decryption policy, to obtain the second decrypted data component through collaborative decryption.

A specific process of performing, by the second service terminal, collaborative decryption on the first decrypted data component based on the second private key component to obtain the second decrypted data component through collaborative decryption may include: The second service terminal may implement fuzzy processing on the second private key component by using a second value whose value is 1, and then may calculate the second decrypted data component by using a fuzzy-processed second private key component and the first decrypted data component meeting the collaborative decryption policy. This can avoid, as much as possible, a risk of unauthorized acquisition of the session service data due to leakage of the second private key component of the second service object when the second service terminal subsequently transmits the second decrypted data component obtained through decryption to the first service terminal. The second decrypted data component in this embodiment of this application is another data component that is used for collaborative decryption and that is calculated by the second service terminal based on the fuzzy-processed second private key component and the first decrypted data component.

In other words, in this embodiment of this application, the fuzzy processing performed by the second service terminal may be specifically: determining (namely, calculating) a difference (namely, d2-1) between the second private key component (namely, d2) and the second value (to be specific, the second value is 1), and performing multiplication processing on the difference (namely, d2-1) and the first decrypted data component to obtain the second decrypted data component. The second decrypted data component may be denoted as T2. A manner of determining the second decrypted data component may be as follows: T2=[d2-1]T1, where d2 represents the second private key component of the second service object, T 1 represents the first decrypted data component, and [d2-1] represents the fuzzy-processed second private key component obtained by performing fuzzy processing on the second private key component.

Operation S106: The second service terminal may return the second decrypted data component to the first service terminal.

Operation S107: The first service terminal may obtain the session service data through decryption based on the second decrypted data component and the first encrypted data component.

Specifically, the first service terminal may determine whether the second decrypted data component meets the collaborative decryption policy when receiving the second decrypted data component, and then may obtain the session service data through decryption based on the second decrypted data component and the first encrypted data component when determining that the second decrypted data component meets the collaborative decryption policy.

The first service terminal may receive the second decrypted data component returned by the second service terminal, and determine whether the second decrypted data component meets the collaborative decryption policy. If determining that the second decrypted data component meets the collaborative decryption policy, the first service terminal may further perform operation S107. In some embodiments, if determining that the second decrypted data component does not meet the collaborative decryption policy, the first service terminal outputs error information (to be specific, first error information) and exits the collaborative decryption process. The first error information is configured for indicating that the second decrypted data component is incorrect.

A specific process of determining, by the first service terminal, whether the second decrypted data component meets the collaborative decryption policy may include: The first service terminal may determine whether the second decrypted data component meets the expression of the collaborative elliptic curve. If determining that the second decrypted data component meets the expression of the collaborative elliptic curve, the first service terminal may further determine whether the second decrypted data component is an infinity point. If the second decrypted data component is not an infinity point, the first service terminal may determine that the second decrypted data component meets the collaborative decryption policy.

In an example, in this embodiment of this application, if determining that the second decrypted data component does not meet the expression of the collaborative elliptic curve, the first service terminal may determine that the second decrypted data component does not meet the collaborative decryption policy. Alternatively, if determining that the second decrypted data component is an infinity point beyond the collaborative elliptic curve, the first service terminal may also determine that the second decrypted data component does not meet the collaborative decryption policy.

In this embodiment of this application, the encrypted session data may further include the second encrypted data component and the third encrypted data component. In this case, a specific process of obtaining, by the first service terminal, the session service data through decryption based on the second decrypted data component and the first encrypted data component may include: The first service terminal may determine a decryption elliptic curve point on the collaborative elliptic curve based on the second decrypted data component and the first encrypted data component. The decryption elliptic curve point herein is an elliptic curve point that is used for data decryption and that is determined on the collaborative elliptic curve. Then the first service terminal may extract the second encrypted data component from the encrypted session data, and determine a bit length of the second encrypted data component. The first service terminal may perform key extension on the bit length and the decryption elliptic curve point by using the KDF in the collaborative decryption policy to obtain a key derivation bit string, and obtain the session service data through decryption based on the key derivation bit string and the second encrypted data component when the key derivation bit string meets a decryption condition.

The key extension in this embodiment of this application means that, when determining the data length of the second encrypted data component as a bit length, the first service terminal may generate, by using the KDF, a bit string whose length is equal to the bit length, for example, may generate a bit string whose bit length klen is equal to the data length M. In this embodiment of this application, the bit string that is generated by using the KDF and whose length is equal to the bit length may be referred to as the key derivation bit string.

The KDF may be a KDF in the GB/T 32918-2016.4 standard. A coordinate point of the decryption elliptic curve point may be expressed as (x2, y2)=[r⁻¹]T2-C1, where (x2, y2) represents the coordinate point of the decryption elliptic curve point, r represents the random mask, T2 represents the second decrypted data component, and C1 represents the first encrypted data component. For ease of understanding, in this embodiment of this application, the bit length of the second encrypted data component may be denoted as klen, and the key derivation bit string may be denoted as a key derivation bit string t. In this case, the key derivation bit string t=KDF(x2∥y2, klen), where the symbol "∥" is configured for indicating to concatenate bit strings of two coordinate points of the decryption elliptic curve point to obtain a concatenated bit string. In this way, the first service terminal may perform key derivation processing (for example, may perform key extension) on the concatenated bit string based on the bit length (namely, klen) of the second decrypted data component by using the KDF, to obtain the key derivation bit string t whose length is equal to the bit length (namely, klen) through extension.

In this embodiment of this application, a data type of (x2, y2) needs to be pre-converted into a bit string corresponding to the decryption elliptic curve point, and then key extension may be performed on the bit string corresponding to the decryption elliptic curve point and the bit length of the second encrypted data component by using the KDF, to obtain the key derivation bit string t.

A specific process of obtaining, by the first service terminal, the session service data through decryption based on the key derivation bit string and the second encrypted data component may include: The first service terminal may perform an exclusive OR operation on the key derivation bit string and the second encrypted data component to obtain the session service data through decryption. For example, the session service data obtained through decryption may be denoted as M', and the session service data obtained through decryption M'=C2 ⊕ t, where C2 represents the second encrypted data component, and the operator " ⊕ " represents an exclusive OR operation.

When obtaining the key derivation bit string, the first service terminal may determine whether the key derivation bit string meets the decryption condition in the collaborative decryption policy. In this way, when determining that the key derivation bit string (namely, the key derivation bit string t, where the key derivation bit string t may be the foregoing bit string t') meets the decryption condition in the collaborative decryption policy, the first service terminal may further obtain the session service data through decryption based on the key derivation bit string and the second encrypted data component. The decryption condition is a condition that the key derivation bit string is not an all-zero bit string. In other words, in this embodiment of this application, the first service terminal may determine whether the key derivation bit string is an all-zero bit string. If the key derivation bit string is not an all-zero bit string, the first service terminal may determine that the key derivation bit string meets the decryption condition. In some embodiments, if the key derivation bit string is an all-zero bit string, the first service terminal may determine that the key derivation bit string does not meet the decryption condition, and output third error information. The third error information herein is configured for indicating that the key derivation bit string obtained through calculation is incorrect.

Further, in some embodiments, when obtaining the session service data (for example, the foregoing M') through decryption, the first service terminal may further perform hash calculation on the session service data obtained through decryption and the decryption elliptic curve point, to obtain a digest value corresponding to the session service data. Then the first service terminal may extract the third encrypted data component from the encrypted session data, and compare the digest value corresponding to the session service data with the third encrypted data component, to verify, by using the third encrypted data component, correctness (namely, validity) of the session service data obtained through decryption. For example, when determining that the digest value corresponding to the session service data is the same as the third encrypted data component, the first service terminal may determine that the session service data obtained through decryption is valid, and therefore may output the valid session service data.

A manner of calculating the digest value corresponding to the session service data is as follows: u=Hash(x2∥M'∥y2), where u represents the digest value corresponding to the session service data, (x2, y2) represents the decryption elliptic curve point, M' represents the session service data obtained through decryption, and Hash() is a predetermined cryptographic hash function in the foregoing SM2 algorithm. In other words, in this embodiment of this application, the first service terminal may obtain a first coordinate point (namely, x2) and a second coordinate point (namely, y2) from the coordinate point of the decryption elliptic curve point; and when the first coordinate point (namely, x2) and the second coordinate point (namely, y2) are converted into bit string, may concatenate a converted-into bit string of the first coordinate point and the session service data obtained through decryption to obtain a first concatenated bit string, and then may concatenate the first concatenated bit string and a converted-into bit string of the second coordinate point to obtain a second concatenated bit string. Then the first service terminal may perform hash calculation on the second concatenated bit string by using the predetermined cryptographic hash function in the foregoing SM2 algorithm, and use a hash value obtained through hash calculation as the digest value corresponding to the session service data.

The first service terminal may directly output fourth error information and exit the collaborative decryption process when the first service terminal determines that the digest value corresponding to the session service data is different from the third encrypted data component. The fourth error information herein is configured for indicating a check error.

In this embodiment of this application, a first service terminal may be a service terminal among a plurality of service terminals. The plurality of service terminals herein may further include a second service terminal other than the first service terminal. The first service terminal stores a first private key component pre-generated for a first service object. The second service terminal stores a second private key component pre-generated for a second service object. The first private key component and the second private key component herein are configured for collaboratively generating a collaborative public key that is to be used for data encryption. Both the first service object and the second service object herein are service objects participating in data decryption. Based on this, for the first service terminal in this embodiment of this application, the first service terminal may directly or indirectly receive encrypted session data transmitted by a data encryption terminal corresponding to an encryption service object. The encrypted session data is obtained by the data encryption terminal by performing data encryption on session service data by using the collaborative public key. Further, the first service terminal may obtain a first encrypted data component from the encrypted session data, and generate, by using a random number generator (namely, a first random number generator) on the first service terminal, a random mask configured for performing mask processing on the first encrypted data component. In this way, the first service terminal may obtain mask data by performing mask processing on the first encrypted data component by using the random mask, and then may obtain, based on the first private key component and the mask data, a first decrypted data component corresponding to the first encrypted data component, and therefore may transmit the first decrypted data component to the second service terminal corresponding to the second service object. During collaborative decryption by the first service terminal and the second service terminal, the first service terminal does not directly transmit a private key component (namely, the first private key component) of the first service terminal to the second service terminal, but transmits the first decrypted data component obtained through decryption by using a fuzzy-processed first private key component to the second service terminal. This can effectively reduce a risk of leakage of the first private key component of the first service object during a session between the first service terminal and the second service terminal. Further, the second service terminal may determine whether the first decrypted data component meets a collaborative decryption condition after obtaining the first decrypted data component, and then may perform collaborative decryption on the first decrypted data component based on the second private key component when determining that the first decrypted data component meets a collaborative decryption policy, to obtain a second decrypted data component through collaborative decryption. Similarly, during the collaborative decryption by the first service terminal and the second service terminal, the second service terminal does not directly transmit a private key component (namely, the second private key component) of the second service terminal to the first service terminal either, but transmits the second decrypted data component obtained through decryption by using a fuzzy-processed second private key component to the first service terminal. This can effectively reduce a risk of leakage of the second private key component of the second service object during the session between the first service terminal and the second service terminal. The first service terminal may obtain the session service data through decryption based on the second decrypted data component and the first encrypted data component when determining that the received second decrypted data component meets the collaborative decryption policy. In this embodiment of this application, session service data may be obtained through decryption in a two-party collaborative decryption mode. This means that none of parties participating in collaborative decryption can independently obtain session service data during a session process through decryption by using a private key component stored by the party in a single-point mode. To be specific, in this embodiment of this application, private key components used for collaborative decryption are respectively deployed on different service terminals, to not only avoid leakage of a complete private key caused by single-point storage of the complete private key in the related art, but also improve transmission reliability and security of the session service data obtained through decryption. This can meet a requirement of collaboratively decrypting encrypted session data by any two service objects.

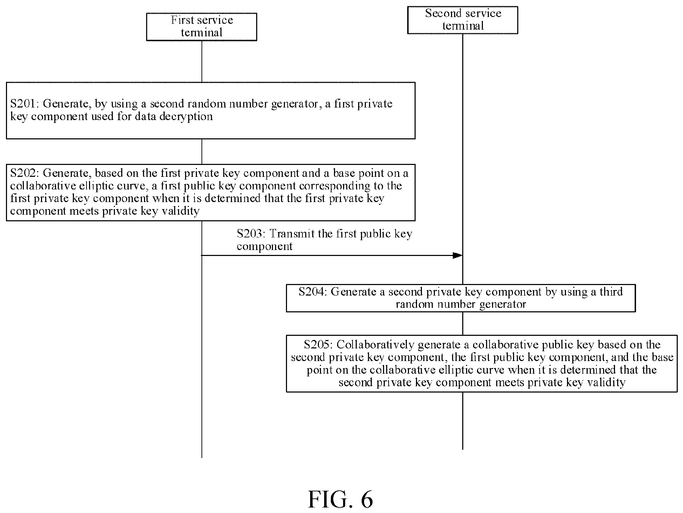

FIG. 6 shows a method for generating a collaborative public key according to an embodiment of this application. The method for generating a collaborative public key may be jointly performed by a first service terminal and a second service terminal. As shown in FIG. 6, the method for generating a collaborative public key may include the following operations S201 to S205.

Operation S201: The first service terminal generates, by using a second random number generator, a first private key component used for data decryption. The first private key component may be denoted as d1, where d1 ∈[2, n-1], and the value range [2, n-1] herein is the foregoing preset private key value range. The first private key component herein is a random value randomly generated by the first service terminal based on the preset private key value range (for example, [2, n-1]). To be specific, the first private key component may be partial private key information configured for participating in simulation to obtain a complete private key (namely, a private key) when data decryption is performed on encrypted session data in a collaborative decryption mode indicated by a collaborative decryption policy.

In this embodiment of this application, for ease of distinguishing from a random number generator configured for generating a random mask in a collaborative decryption process, for the first service terminal in this embodiment of this application, the random number generator configured for generating the random mask (for example, the foregoing r) in the collaborative decryption process may be collectively referred to as a first random number generator, and a random number generator configured for generating the first private key component (for example, the foregoing d1) in a collaborative public key generation process may be collectively referred to as the second random number generator.

Operation S202: The first service terminal may generate, based on the first private key component and a base point on a collaborative elliptic curve, a first public key component corresponding to the first private key component when determining that the first private key component meets private key validity.

The first public key component herein is partial public key information that may be generated on the first service terminal and that may be configured for participating in generation of a collaborative public key used for data encryption.

The collaborative elliptic curve herein is the same as the collaborative elliptic curve in the foregoing collaborative decryption policy. The base point on the collaborative elliptic curve may be denoted as G, and an order of the base point is n. A calculation formula for the first public key component is as follows: P 1=[d1]G.

The first service terminal further needs to verify validity of the first private key component before the first service terminal performs a multiple operation on the first private key component and the base point on the collaborative elliptic curve to obtain the first public key component.

Specifically, the first service terminal may obtain an associated value (the associated value herein may be the foregoing first value) and an agreed-upon value that are associated with the first private key component, and then may perform a modulo operation based on the first private key component, the associated value, and the agreed-upon value to obtain a modulo value corresponding to the first private key component. If the modulo value corresponding to the first private key component is not equal to a preset target value, it is determined that the first private key component meets private key validity. In some embodiments, if the modulo value corresponding to the first private key component is equal to the target value, it is determined that the first private key component does not meet private key validity. In this case, operation S201 may be performed to re-generate, by using the second random number generator, a new first private key component (for example, d1=d1') used for data decryption. Then validity of the new first private key component may be re-determined based on the foregoing modulo value calculation formula (for example, (d1-1)⁻¹mod n).

The agreed-upon value may be n defined in SM2, the associated value may be 1, and a calculation formula for the modulo value corresponding to the first private key component is as follows: the modulo value corresponding to the first private key component=(d1-1)⁻¹mod n. For example, the target value is 1. If (d1-1)⁻¹mod n is not equal to 1, it is determined that the first private key component meets private key validity, and operation S202 may be further performed. In some embodiments, if (d1-1)⁻¹mod n is equal to 1, it is determined that the first private key component does not meet private key validity, and operation S201 needs to be performed.

Operation S203: The first service terminal transmits the first public key component to the second service terminal.

Correspondingly, the second service terminal may receive the first public key component transmitted by the first service terminal. In this case, the second service terminal may further perform operation S204.

Operation S204: The second service terminal generates a second private key component by using a third random number generator.

The second private key component may be denoted as d2, where d2∈[2, n-1]. Similarly, the value range [2, n-1] herein is the foregoing preset private key value range. The second private key component herein is another random value randomly generated by the second service terminal based on the preset private key value range (for example, [2, n-1]). To be specific, the second private key component may be another piece of partial private key information configured for participating in simulation to obtain the complete private key (namely, the private key) when data decryption is performed on the encrypted session data in the collaborative decryption mode indicated by the collaborative decryption policy.

In this embodiment of this application, for ease of distinguishing between the first random number generator and the second random number generator, a random number generator configured for generating the second private key component (for example, the foregoing d2) in the collaborative public key generation process may be collectively referred to as the third random number generator.

In some embodiments, operation S204 may alternatively be performed together with operation S201. To be specific, when the first service terminal generates the first private key component by using the first random number generator, the second service terminal may also synchronously generate the second private key component by using the third random number generator. In some embodiments, in one or more implementations, operation S204 may alternatively be performed earlier than operation S201. Specific timing of generating the first private key component by the first service terminal and generating the second private key component by the second service terminal is not limited herein.

Operation S205: The second service terminal may collaboratively generate a collaborative public key based on the second private key component, the first public key component, and the base point on the collaborative elliptic curve when determining that the second private key component meets private key validity.

The second service terminal further needs to verify validity of the second private key component before the second service terminal collaboratively generates the collaborative public key based on the second private key component, the first public key component, and the base point on the collaborative elliptic curve. Specifically, the second service terminal may alternatively obtain an associated value (for example, the foregoing second value) and an agreed-upon value that are associated with the second private key component, and may perform a modulo operation based on the second private key component, the associated value, and the agreed-upon value to obtain a modulo value corresponding to the second private key component. If the modulo value corresponding to the second private key component is not equal to a preset target value, it is determined that the second private key component meets private key validity. In some embodiments, if the modulo value corresponding to the second private key component is equal to the target value, operation S204 may be performed.

The associated value and the agreed-upon value that are associated with the second private key component may be the same as the associated value and the agreed-upon value that are associated with the first private key component. A calculation formula for the modulo value corresponding to the second private key component is as follows: the modulo value corresponding to the second private key component=(d2-1)⁻¹mod n. For example, the target value is 1. If (d2-1)^{- 1}mod n is not equal to 1, it is determined that the second private key component meets private key validity, and operation S205 is performed. In some embodiments, if (d2-1)⁻¹mod n is equal to 1, it is determined that the second private key component does not meet private key validity, and operation S204 needs to be performed.

A manner of calculating the collaborative public key is as follows: P=[d2-1]P1-[d2]G, where P represents the collaborative public key, d2 represents the second private key component, P1 represents the first public key component, and G is the base point on the collaborative elliptic curve.

Operation S203 may be performed before or after operation S204. This is not limited in this embodiment of this application.

In an example, in this embodiment of this application, the second service terminal may alternatively generate a second public key component based on the second private key component of the second service terminal and the base point on the collaborative elliptic curve, and transmit the second public key component to the first service terminal. The first service terminal generates, by using the second random number generator, the first private key component used for data decryption. Further, when determining that the first private key component meets private key validity, the first service terminal may collaboratively generate a collaborative public key based on the first private key component, the second public key component, and the base point on the collaborative elliptic curve, and publish the collaborative public key. A specific manner of generating the collaborative public key is not limited in this embodiment of this application.

In this embodiment of this application, the first service terminal and the second service terminal may independently generate the first private key component and the second private key component respectively, and then collaboratively generate the collaborative public key based on the first private key component and the second private key component. This means that, in this embodiment of this application, different private key components used for data decryption are respectively stored on different service terminals, to avoid leakage caused by storage of a private key by a single party. This increases, to some extent, difficulty of unauthorized acquisition of private key components stored on different service terminals, so that security of a complete private key collaboratively determined based on the private key components during a collaborative decryption process is ensured.

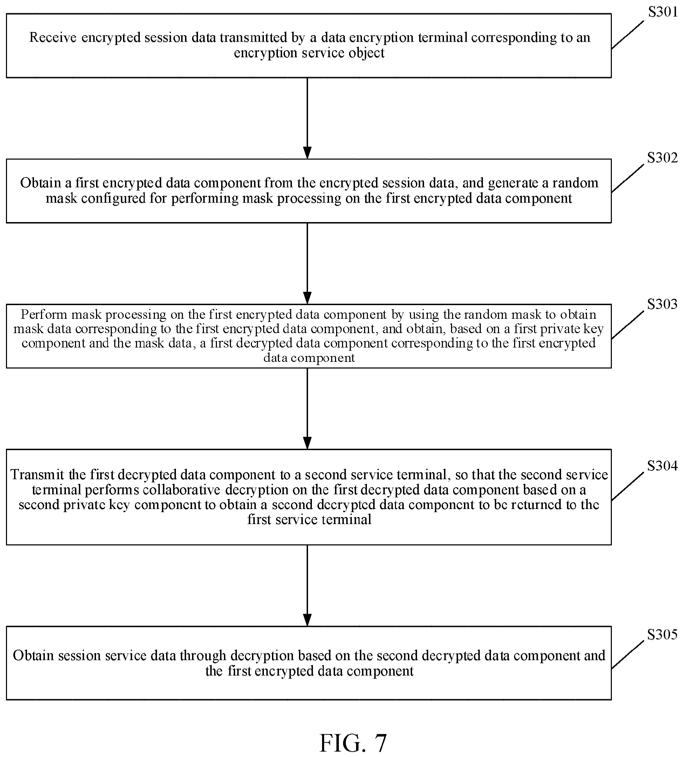

FIG. 7 is a schematic flowchart of a data processing method according to an embodiment of this application. The data processing method may be performed by a first service terminal (namely, the service terminal 101 in FIG. 1) among a plurality of service terminals. The plurality of service terminals herein further include a second service terminal other than the first service terminal. The first service terminal stores a first private key component pre-generated for a first service object. The second service terminal stores a second private key component pre-generated for a second service object. The first private key component and the second private key component are configured for collaboratively generating a collaborative public key that is to be used for data encryption. Both the first service object and the second service object are service objects participating in data decryption. As shown in FIG. 7, the data processing method may include the following operations S301 to S305.

Operation S301: Receive encrypted session data. In embodiments of the present application, the encrypted session data is transmitted by a data encryption terminal corresponding to an encryption service object.

The encryption service object is a service object that performs data encryption on to-be-transmitted session service data. The encrypted session data is obtained by the data encryption terminal by performing data encryption on the session service data to be transmitted by using the collaborative public key.

Specifically, when performing a session with the encryption service object through the first service terminal, the first service object may receive the encrypted session data, for the session service data, that is transmitted by the data encryption terminal corresponding to the encryption service object. The first service object is a service object in a collaborative decryption object configured to perform data decryption. The encryption service object is a service object requesting to perform data decryption. The encrypted session data is obtained by the data encryption terminal by encrypting the session service data based on a collaborative public key associated with the collaborative decryption object. The collaborative public key is generated based on the first private key component of the first service object and the second private key component of the second service object in the collaborative decryption object. The encrypted session data includes a first encrypted data component, a second encrypted data component, and a third encrypted data component.

Operation S302: Obtain the first encrypted data component from the encrypted session data, and generate a random mask configured to perform mask processing on the first encrypted data component.

Specifically, the first service terminal may obtain the first encrypted data component from the encrypted session data, and may generate, by using a first random number generator, the random mask configured for performing mask processing on the first encrypted data component when determining that the first encrypted data component in the encrypted session data meets a collaborative decryption policy associated with the collaborative decryption object.

Operation S303: Perform mask processing on the first encrypted data component by using the random mask to obtain mask data corresponding to the first encrypted data component, and obtain, based on the first private key component and the mask data, a first decrypted data component corresponding to the first encrypted data component.

Specifically, the first service terminal may perform mask processing on the first encrypted data component by using the random mask to obtain the mask data corresponding to the first encrypted data component. In this way, when obtaining the mask data, the first service terminal may further obtain, based on the first private key component and the mask data, the first decrypted data component corresponding to the first encrypted data component.

The first service terminal may obtain an agreed-upon value associated with the random mask, and perform a modulo operation based on the random mask and the agreed-upon value to obtain a modulo value corresponding to the random mask. If the modulo value corresponding to the random mask is not equal to a mask value, mask processing is performed on the first encrypted data component by using the random mask to obtain the mask data, and operation S304 is performed. In some embodiments, if the modulo value corresponding to the random mask is equal to the mask value, a random mask configured for performing mask processing on the first encrypted data component is re-generated by using the first random number generator, and operation S303 is performed.

Operation S304: Transmit the first decrypted data component to the second service terminal, so as to enable the second service terminal to perform collaborative decryption on the first decrypted data component based on the second private key component to obtain a second decrypted data component to be returned to the first service terminal.

Specifically, the first service terminal may transmit the first decrypted data component to the second service terminal corresponding to the second service object. In this way, when determining that the first decrypted data component meets the collaborative decryption policy, the second service terminal further performs collaborative decryption on the first decrypted data component based on the second private key component to obtain the second decrypted data component through collaborative decryption.

Operation S305: Obtain the session service data by using the second decrypted data component and the first encrypted data component for the data decryption.

Specifically, the first service terminal may receive the second decrypted data component returned by the second service terminal, and further obtain the session service data through decryption based on the second decrypted data component and the first encrypted data component when determining that the second decrypted data component meets the collaborative decryption policy. In this embodiment of this application, the first encrypted data component may be an encrypted data component that meets the collaborative decryption policy and that is determined by the first service terminal. The collaborative decryption policy herein may specifically include a collaborative elliptic curve used for collaborative decryption.

If the second decrypted data component meets an expression of the collaborative elliptic curve and the second decrypted data component is not an infinity point, it can be determined that the second decrypted data component meets the collaborative decryption policy. In some embodiments, if the second decrypted data component does not meet the expression of the collaborative elliptic curve or the second decrypted data component is an infinity point, it is determined that the second decrypted data component does not meet the collaborative decryption policy, and first error information is outputted.

A specific process of obtaining the session service data by using the second decrypted data component and the first encrypted data component may include: The first service terminal may determine a decryption elliptic curve point on the collaborative elliptic curve based on the second decrypted data component and the first encrypted data component. Further, the first service terminal may extract the second encrypted data component from the encrypted session data, and determine a bit length of the second encrypted data component. Further, the first service terminal may perform key extension on the bit length and the decryption elliptic curve point by using a KDF in the collaborative decryption policy to obtain a key derivation bit string. Further, the first service terminal may obtain the session service data through decryption based on the key derivation bit string and the second encrypted data component when determining that the key derivation bit string meets a decryption condition in the collaborative decryption policy.

Further, the first service terminal in this embodiment of this application may further perform hash calculation on the session service data obtained through decryption and the decryption elliptic curve point to obtain a digest value corresponding to the session service data. Then the first service terminal may extract the third encrypted data component from the encrypted session data, and compare the digest value corresponding to the session service data with the third encrypted data component. When the digest value corresponding to the session service data is the same as the third encrypted data component, the first service terminal may output the session service data.

In an embodiment, the first service terminal may receive a second public key component transmitted by the second service terminal. The second public key component herein is generated by the second service terminal based on the second private key component and a base point on the collaborative elliptic curve. Further, the first service terminal may generate, by using a second random number generator, the first private key component used for data decryption. In this way, when determining that the first private key component meets private key validity, the first service terminal may further collaboratively generate the collaborative public key based on the first private key component, the second public key component, and the base point on the collaborative elliptic curve. Finally, the first service terminal may publish the collaborative public key.

In another embodiment, the first service terminal may generate, by using a second random number generator, the first private key component used for data decryption. Further, the first service terminal may further generate a first public key component of the first service object based on the first private key component and a base point on the collaborative elliptic curve when determining that the first private key component meets private key validity. Further, the first service terminal may transmit the first public key component to the second service terminal, so that the second service terminal may generate, by using a third random number generator, the second private key component used for data decryption, and collaboratively generate the collaborative public key based on the second private key component, the first public key component, and the base point on the collaborative elliptic curve when determining that the second private key component meets private key validity.

The first service terminal may obtain an associated value and an agreed-upon value that are associated with the first private key component, and may perform a modulo operation based on the first private key component, the associated value, and the agreed-upon value to obtain a modulo value corresponding to the first private key component. If the modulo value corresponding to the first private key component is not equal to a target value, it can be determined that the first private key component meets private key validity. In some embodiments, if the modulo value corresponding to the first private key component is equal to the target value, it can be determined that the first private key component does not meet private key validity, and a first private key component used for data decryption may be re-generated by using the second random number generator.

In this embodiment of this application, the first random number generator, the second random number generator, and the third random number generator may be a same random number generator, or may be different random number generators. This is not limited herein.

In this embodiment of this application, the first service terminal may directly or indirectly receive the encrypted session data transmitted by the data encryption terminal. To be specific, in this embodiment of this application, to ensure transmission security and reliability of the session service data that needs to be transmitted, the data encryption object may perform data encryption on the session service data by using the collaborative public key collaboratively generated based on the first private key component and the second private key component. In this way, after obtaining the encrypted session data that is obtained through encryption, the first service terminal may further obtain the first encrypted data component from the encrypted session data, and may generate, on the first service terminal, the random mask configured for performing mask processing on the first encrypted data component, and then may perform mask processing on the first encrypted data component by using the random mask to obtain the mask data corresponding to the first encrypted data component. Further, the first service terminal may obtain the first decrypted data component corresponding to the first encrypted data component by using the first private key component and the mask data, and may transmit the first decrypted data component to the second service terminal. Therefore, the second service terminal may perform collaborative decryption on the first decrypted data component based on the second private key component stored on the second service terminal, and may return the second decrypted data component obtained through collaborative decryption to the first service terminal. In this way, the first service terminal may obtain the session service data through decryption based on the second decrypted data component and the first encrypted data component. In this embodiment of this application, neither of the first service object and the second service object that participate in collaborative decryption can independently obtain the session service data through decryption by using a private key component stored by the first service object or the second service object in a single-point mode. To be specific, in this embodiment of this application, private key components used for collaborative decryption are respectively deployed on different service terminals, to not only avoid private key leakage caused by single-point storage of the private key, but also improve reliability and security of the session service data obtained through decryption. In addition, in this embodiment of this application, service objects in the collaborative decryption object jointly perform collaborative decryption on the encrypted session data transmitted by the encryption service object. This can further meet a requirement of collaborative decryption by the service objects in the collaborative decryption object.

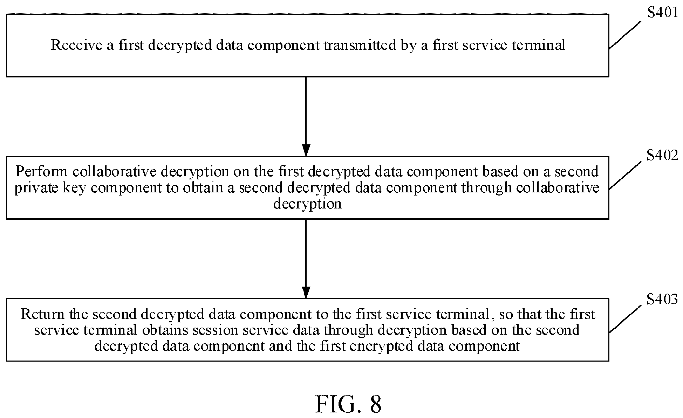

FIG. 8 is a schematic flowchart of a data processing method according to an embodiment of this application. The data processing method may be performed by a second service terminal among a plurality of service terminals. The plurality of service terminals further include a first service terminal other than the second service terminal. The first service terminal stores a first private key component pre-generated for a first service object. The second service terminal stores a second private key component pre-generated for a second service object. The first private key component and the second private key component are configured to collaboratively generate a collaborative public key for data encryption. Both the first service object and the second service object are service objects participating in data decryption. As shown in FIG. 8, the data processing method may include the following operations S401 to S403.

Operation S401: Receive a first decrypted data component. In embodiments of the present application, the first decrypted data component can be transmitted by the first service terminal.

The first decrypted data component is obtained by the first service terminal based on the first private key component and mask data. The mask data is obtained by the first service terminal by performing mask processing on a first encrypted data component in encrypted session data by using a random mask. The random mask is configured to indicate the first service terminal to perform mask processing on the first encrypted data component. The encrypted session data is transmitted by a data encryption terminal corresponding to an encryption service object. The encryption service object is a service object that performs data encryption on to-be-transmitted session service data. The encrypted session data is obtained by performing data encryption on the session service data to be transmitted by using the collaborative public key.

In other words, in this embodiment of this application, the first decrypted data component may be generated by the first service terminal based on the mask data and the first private key component of the first service object corresponding to the first service terminal when the first service terminal performs mask processing on the first encrypted data component in the encrypted session data by using the random mask to obtain the mask data. The random mask herein is generated by the first service terminal by using a first random number generator when the first service terminal determines that the first encrypted data component meets a collaborative decryption policy. The encrypted session data herein may be specifically transmitted by the data encryption terminal corresponding to the encryption service object when the first service object performs a session with the encryption service object through the first service terminal.

Operation S402: Perform collaborative decryption on the first decrypted data component based on the second private key component to obtain a second decrypted data component through collaborative decryption.

Specifically, the second service terminal may perform collaborative decryption on the first decrypted data component based on the second private key component when determining that the first decrypted data component meets the collaborative decryption policy, to obtain the second decrypted data component through collaborative decryption.

The collaborative decryption policy includes a collaborative elliptic curve used for data decryption. If the first decrypted data component meets an expression of the collaborative elliptic curve and the first decrypted data component is not an infinity point, it is determined that the first decrypted data component meets the collaborative decryption policy. In some embodiments, if the first decrypted data component is not a coordinate point on the collaborative elliptic curve (in other words, the first decrypted data component does not meet the expression of the collaborative elliptic curve) or the first decrypted data component is an infinity point, it is determined that the first decrypted data component does not meet the collaborative decryption policy, and second error information is returned to the first service terminal. The second error information is configured for indicating that the first decrypted data component is incorrect.

Operation S403: Return the second decrypted data component to the first service terminal, so as to enable the first service terminal to obtain the session service data by using the second decrypted data component and the first encrypted data component for the data decryption.

In an embodiment, the second service terminal may receive a first public key component of the first service object that is transmitted by the first service terminal. The first public key component herein is generated by the first service terminal by using the first private key component and a base point on a collaborative elliptic curve. Further, the second service terminal may generate, by using a third random number generator, the second private key component used for data decryption. Further, the second service terminal may collaboratively generate the collaborative public key based on the second private key component, the first public key component, and the base point on the collaborative elliptic curve when determining that the second private key component meets private key validity. Further, the second service terminal may publish the collaborative public key.

In this embodiment of this application, the second service terminal may serve as a data encryption terminal or a data decryption terminal that participates in collaborative decryption. For example, when the second service terminal serves as a data encryption terminal, the encryption service object is the second service object. In this case, when the first service object performs a session with the second service object through the first service terminal, the second service terminal may directly obtain session service data for the session, and then may encrypt the to-be-transmitted session service data by using a collaborative public key associated with a collaborative decryption object to obtain encrypted session data, and transmit the encrypted session data to the first service terminal.

In this embodiment of this application, service terminals corresponding to service objects in the collaborative decryption object may independently generate private key components for the service objects (for example, the first service terminal may be configured to independently pre-generate the first private key component for the first service object, and the second service terminal may independently pre-generate the second private key component for the second service object). For the first service terminal and the second service terminal that participate in collaborative decryption, when the first service terminal generates the first private key component, generation of the second private key component by the second service terminal is not affected. Similarly, when the second service terminal generates the second private key component, generation of the first private key component by the first service terminal is not affected either. In this way, both the first service terminal and the second service terminal may be configured to separately store their own private key components, and the first service terminal and the second service terminal do not directly disclose their own private key components to each other during a collaborative decryption process. This means that neither of the first service object and the second service object that participate in collaborative decryption can directly and independently obtain a private key through calculation by using various private key components based on parameters separately obtained by the first service object and the second service object. This can avoid, to some extent, leakage caused by storage of a private key component by a single party. In addition, in this embodiment of this application, when service objects in the collaborative decryption object jointly perform collaborative decryption (for example, two-party collaborative decryption) on the encrypted session data transmitted by the encryption service object, it can be further ensured that the data decryption requirement of collaborative decryption is securely and reliably implemented by the service objects in the collaborative decryption object.

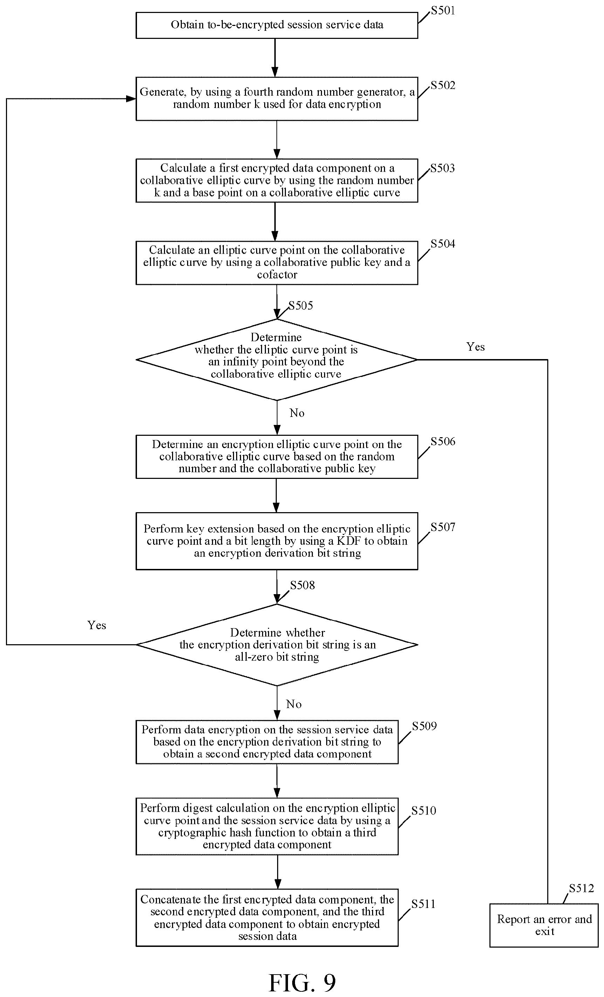

FIG. 9 is a schematic flowchart of a data processing method according to an embodiment of this application. The data processing method may be performed by a data encryption terminal. As shown in FIG. 9, the data processing method may include the following operations S501 and S512.

Operation S501: Obtain to-be-encrypted session service data. The session service data may be a bit string M, and a bit length of the session service data is klen.

Operation S502: Generate, by using a fourth random number generator, a random number k used for data encryption, where k∈[1, n-1].

Operation S503: Calculate a first encrypted data component on a collaborative elliptic curve by using the random number k and a base point on the collaborative elliptic curve. The first encrypted data component may be denoted as C1, and C1=[k]G.

Operation S504: Calculate an elliptic curve point on the collaborative elliptic curve by using a collaborative public key and a cofactor.

The elliptic curve point herein may be an elliptic curve point S, where S=[h]P. P is a collaborative public key collaboratively generated by a first service terminal and a second service terminal according to the foregoing collaborative public key generation process, and P herein may be equal to PB.

Operation S505: Determine whether the elliptic curve point is an infinity point beyond the collaborative elliptic curve. If the elliptic curve point is an infinity point on the collaborative elliptic curve, operation S512 is performed to output an error and exit the encryption process. On the contrary, in some embodiments, if the elliptic curve point is not an infinity point beyond the collaborative elliptic curve (in other words, if the elliptic curve point is a coordinate point on the collaborative elliptic curve), operation S506 may be further performed.

Operation S506: Determine an encryption elliptic curve point on the collaborative elliptic curve based on the random number and the collaborative public key. The encryption elliptic curve point may be expressed as (x2, y2), in other words, [k]PB=(x2, y2), where PB represents the collaborative public key.

Operation S507: Perform key extension based on the encryption elliptic curve point and the bit length by using a KDF to obtain an encryption derivation bit string.

The data encryption terminal may concatenate a first coordinate value and a second coordinate value of the encryption elliptic curve point to obtain a concatenated value, and perform key extension on the concatenated value and the bit length by using the KDF to obtain the encryption derivation bit string.

Operation S508: Determine whether the encryption derivation bit string is an all-zero bit string. If the encryption derivation bit string is an all-zero bit string, operation S502 is performed. In some embodiments, if the encryption derivation bit string is not an all-zero bit string, operation S509 is further performed.

Operation S509: Perform data encryption on the session service data based on the encryption derivation bit string to obtain a second encrypted data component.

Specifically, the data encryption terminal may perform an exclusive OR operation on the encryption derivation bit string and the session service data to obtain the second encrypted data component. The second encrypted data component may be denoted as C2, and C2=M ⊕ t, where M is the session service data. In a data encryption process, t herein may be specifically an encryption derivation bit string whose length is equal to a data length of the session service data.

Operation S510: Perform digest calculation on the encryption elliptic curve point and the session service data by using a cryptographic hash function to obtain a third encrypted data component.

C3=Hash(x2||M||y2). In the data encryption process, C3 represents the third encrypted data component, Hash() represents a predetermined cryptographic hash function in an SM2 algorithm, and M represents a bit string of session service data with a specific data length.

Operation S511: Concatenate the first encrypted data component, the second encrypted data component, and the third encrypted data component to obtain encrypted session data: C=C1∥C2∥C3.

For ease of understanding, an overall process of the data processing method is described below by using an example in which a collaborative decryption object includes a service object A and a service object B. The session service data is plaintext data, and the encrypted session data is ciphertext data. To implement collaborative decryption by using private key components respectively stored on different service terminals, a service terminal (namely, a first service terminal) corresponding to the service object A and a service terminal (namely, a second service terminal) corresponding to the service object B may be configured to perform the following operations in a collaborative decryption mode indicated by the foregoing collaborative decryption policy.

The first service terminal corresponding to the service object A may perform the following operations:
A1: Receive ciphertext data C transmitted by a target object (namely, the foregoing encryption service object), extract C1 (namely, a first encrypted data component) from C, and verify whether C1 meets an expression of a collaborative elliptic curve. If C1 does not meet the expression of the collaborative elliptic curve, output an error and exit a collaborative decryption process. In some embodiments, if C1 meets the expression of the collaborative elliptic curve, operation A2 may be further performed.
A2: Calculate a collaborative elliptic curve point (namely, the foregoing elliptic curve point S) on the collaborative elliptic curve, where S=[h]C1 (h herein is a cofactor, and a value of h may be 1). Determine whether the collaborative elliptic curve point (namely, the foregoing elliptic curve point S) is an infinity point. If the collaborative elliptic curve point (namely, the foregoing elliptic curve point S) is an infinity point, output error information and exit collaborative decryption on the encrypted session data. In some embodiments, if the collaborative elliptic curve point (namely, the foregoing elliptic curve point S) is not an infinity point, operation A3 may be further performed.
A3: Generate, by using a first random number generator, a random mask r configured for performing mask processing on C1, where r∈[1, n-1].
A4: Calculate r⁻¹ mod n. If r⁻¹ mod n is equal to 1, return to A3. If r⁻¹ mod n is not equal to 1, perform operation A5.
A5: Calculate R=[r]C1, where R represents mask data.
A6: Calculate T1=[d1-1]R by using a first private key component d1 of the first service terminal, and transmit T1 to the second service terminal corresponding to the service object B, where T1 represents a first decrypted data component.

The second service terminal corresponding to the service object B performs the following operations:
B1: Verify whether T1 meets the expression of the collaborative elliptic curve (in other words, whether T1 is a coordinate point on the collaborative elliptic curve). If T1 meets the expression of the collaborative elliptic curve, whether T1 is an infinity point is further determined. If T1 is not an infinity point, operation B2 is performed. In some embodiments, if T1 does not meet the expression of the collaborative elliptic curve or T1 is an infinity point, second error information is returned to the first service terminal.
B2: Calculate T2=[d2-1]T1 by using a second private key component d2 of the second service terminal, where T2 represents a second decrypted data component.
B3: Transmit T2 to the first service terminal.

Further, the first service terminal corresponding to the service object A continues to perform the following operations:
A7: Verify whether T2 meets the expression of the collaborative elliptic curve (in other words, whether T2 is a coordinate point on the collaborative elliptic curve). If T2 meets the expression of the collaborative elliptic curve, whether T2 is an infinity point is further determined. If T2 is not an infinity point, operation A8 is performed. In some embodiments, if T2 does not meet the expression of the collaborative elliptic curve or T2 is an infinity point, first error information is outputted.
A8: Calculate a decryption elliptic curve point (x2, y2)=[r^(-1)]T2-C1 on the collaborative elliptic curve, where r represents the random mask, and C1 represents the first encrypted data component.
A9: Extract a second encrypted data component C2 from C, and calculate a bit length of C2, the bit length being denoted as klen. Calculate a key derivation bit string t=KDF(x2∥y2, klen) by using a KDF in the GB/T 32918-2016.4 standard. If the key derivation bit string t is an all-zero bit string, third error information is outputted. If the key derivation bit string t is not an all-zero bit string, operation A10 is performed.
A10: Calculate plaintext data M'=C2 ⊕ t, where the plaintext data M' is the foregoing session service data obtained through decryption. To be specific, the session service data obtained through decryption is obtained by performing an exclusive OR operation on the second encrypted data component C2 by using the key derivation bit string t.
A11: Calculate a digest value u=Hash(x2∥M'∥y2) corresponding to the plaintext data, extract a third encrypted data component C3 from C, and if u (to be specific, a to-be-checked hash value that is obtained through concatenation and calculation based on the session service data obtained through decryption and a coordinate point of the decryption elliptic curve point) is not equal to C3, report an error and exit the collaborative decryption process.
A12: Output the plaintext data M'.

The data processing method provided in the embodiments of this application is verified below. The verification process is as follows:
A collaborative public key is denoted as a public key P, and a private key (namely, the foregoing complete private key) corresponding to the public key P is denoted as a private key d. In this case, the public key P may be generated by using the private key d and a base point G on an elliptic curve (which is the same as the foregoing collaborative elliptic curve): P=[d]G. Then, according to operation S205, the public key P=[d2-1]P1-[d2]G=[(d2-1)×d1]G-[d2]G=[(d2-1)×d1]G-[d2-1]G-G=[(d2-1)×(d1-1)]G-G. Therefore, [d]G=[(d2-1)×(d1-1)]G-G, and d=(d2-1)×(d1-1)-1. Then, according to operation A5 and operation A6, T1=[d1-1]R=[r×(d1-1)]C1.

Further, according to operation B2, T2=[d2-1]T1=[r×(d1-1)×(d2-1)]C1. According to operation A8, (x2, y2)=[r^(-1)]T2-C1=[r^(-1)×r×(d1-1)×(d2-1)]C1-C1=[(d1-1)×(d2-1)]C1-C1=[(d1-1)×(d2-1)]C1-C1=[(d1-1)×(d2-1)-1]C1=[d]C1. This formula is consistent with (x2, y2)=[d]C1 in the SM2 algorithm. Therefore, a result obtained through decryption (namely, the session service data obtained through decryption, for example, the plaintext data M') in the collaborative decryption mode indicated by the foregoing collaborative decryption policy is correct. In the embodiments of this application, during collaborative decryption by using the first private key component and the second private key component, a complete private key (private key for short, for example, the private key d) configured for performing data decryption on the encrypted session data (which may be specifically the first encrypted data component, for example, C1, in the encrypted session data) may be obtained through simulation by using a fuzzy-processed first private key component (namely, (d1-1)) and a fuzzy-processed second private key component (namely, (d2-1)). In other words, in the embodiments of this application, the complete private key may be configured for assisting in verifying, during a collaborative decryption process, correctness and reliability of session service data obtained through collaborative decryption by using different private key components stored on different service terminals.

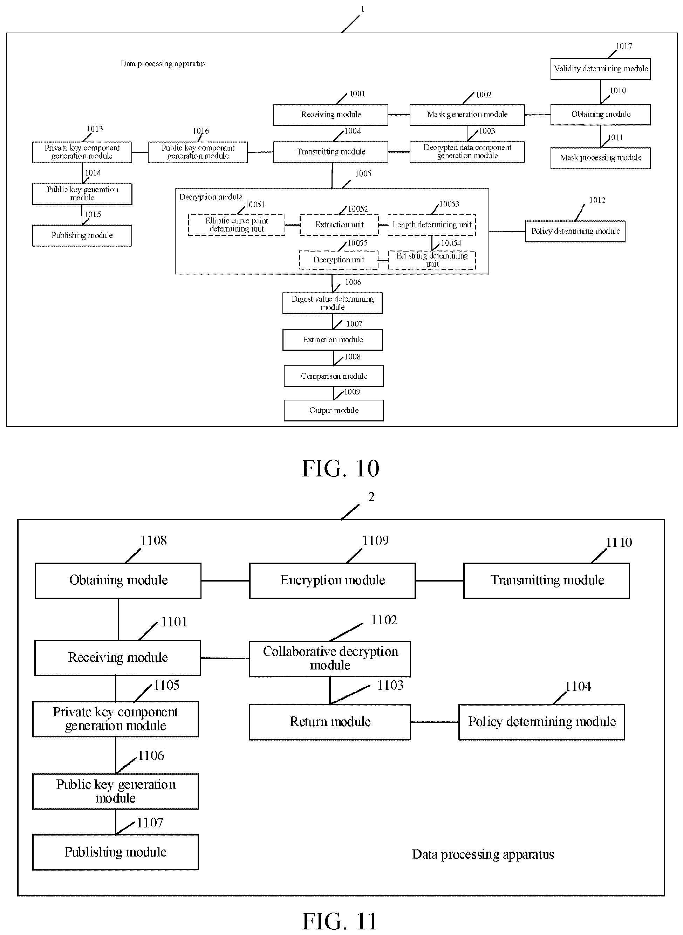

Further, FIG. 10 is a schematic diagram of a structure of a data processing apparatus according to an embodiment of this application. The data processing apparatus 1 may be a computer program (including program code) that is run on a first service terminal (namely, the service terminal 101 in FIG. 1). For example, the data processing apparatus 1 may be application software. The first service terminal herein is a service terminal among a plurality of service terminals. The plurality of service terminals herein further include a second service terminal other than the first service terminal. The first service terminal stores a first private key component pre-generated for a first service object. The second service terminal stores a second private key component pre-generated for a second service object. The first private key component and the second private key component are configured to collaboratively generate a collaborative public key for data encryption. Both the first service object and the second service object are service objects participating in data decryption. The data processing apparatus 1 may be configured to perform corresponding operations in the data processing method provided in the embodiments of this application. The data processing apparatus 1 may include a receiving module 1001, a mask generation module 1002, a decrypted data component generation module 1003, a transmitting module 1004, and a decryption module 1005.

The receiving module 1001 is configured to receive encrypted session data. The encrypted session data is transmitted by a data encryption terminal corresponding to an encryption service object. The encryption service object is a service object that performs data encryption on to-be-transmitted session service data, and the encrypted session data is obtained by the data encryption terminal by performing data encryption on the session service data to be transmitted using the collaborative public key.

The mask generation module 1002 is configured to obtain a first encrypted data component from the encrypted session data, and generate a random mask configured to perform mask processing on the first encrypted data component.

The decrypted data component generation module 1003 is configured to perform mask processing on the first encrypted data component by using the random mask to obtain mask data corresponding to the first encrypted data component, and obtain, based on the first private key component and the mask data, a first decrypted data component corresponding to the first encrypted data component.

The transmitting module 1004 is configured to transmit the first decrypted data component to the second service terminal, so as to enable the second service terminal to perform collaborative decryption on the first decrypted data component based on the second private key component to obtain a second decrypted data component to be returned to the first service terminal.

The decryption module 1005 is configured to obtain the session service data by using the second decrypted data component and the first encrypted data component for the data decryption.

The encrypted session data includes a second encrypted data component. The first encrypted data component is an encrypted data component that meets a collaborative decryption policy and that is determined by the first service terminal. The collaborative decryption policy includes a collaborative elliptic curve used for data decryption. The decryption module 1005 includes an elliptic curve point determining unit 10051, an extraction unit 10052, a length determining unit 10053, a bit string determining unit 10054, and a decryption unit 10055.

The elliptic curve point determining unit 10051 is configured to determine a decryption elliptic curve point on the collaborative elliptic curve based on the second decrypted data component and the first encrypted data component.

The extraction unit 10052 is configured to extract the second encrypted data component from the encrypted session data.

The length determining unit 10053 is configured to determine a bit length of the second encrypted data component.

The bit string determining unit 10054 is configured to perform key extension on the bit length and the decryption elliptic curve point by using a KDF in the collaborative decryption policy to obtain a key derivation bit string.

The decryption unit 10055 is configured to obtain the session service data through decryption based on the key derivation bit string and the second encrypted data component when it is determined that the key derivation bit string meets a decryption condition in the collaborative decryption policy.

The encrypted session data further includes a third encrypted data component, and the apparatus 1 further includes a digest value determining module 1006, an extraction module 1007, a comparison module 1008, and an output module 1009.

The digest value determining module 1006 is configured to perform hash calculation on the session service data obtained through decryption and the decryption elliptic curve point to obtain a digest value corresponding to the session service data.

The extraction module 1007 is configured to extract the third encrypted data component from the encrypted session data.

The comparison module 1008 is configured to compare the digest value corresponding to the session service data with the third encrypted data component.

The output module 1009 is configured to output the session service data when the digest value corresponding to the session service data is the same as the third encrypted data component.

The apparatus 1 further includes an obtaining module 1010 and a mask processing module 1011.

The obtaining module 1010 is configured to obtain an agreed-upon value associated with the random mask, and perform a modulo operation based on the random mask and the agreed-upon value to obtain a modulo value corresponding to the random mask. The agreed-upon value is an order of a base point that is agreed-upon on the collaborative elliptic curve.

The mask processing module 1011 is configured to: if the modulo value corresponding to the random mask is not equal to a preset mask value, perform mask processing on the first encrypted data component by using the random mask to obtain the mask data.

The mask generation module 1002 is further configured to:
if the modulo value corresponding to the random mask is equal to the mask value, re-generate, by using a first random number generator, a random mask configured for performing mask processing on the first encrypted data component.

The first encrypted data component is an encrypted data component that meets the collaborative decryption policy and that is determined by the first service terminal. The collaborative decryption policy includes a collaborative elliptic curve used for collaborative decryption. The apparatus 1 further includes a policy determining module 1012.

The policy determining module 1012 is configured to: if the second decrypted data component meets an expression of the collaborative elliptic curve and the second decrypted data component is not an infinity point on the collaborative elliptic curve, determine that the second decrypted data component meets the collaborative decryption policy. The infinity point is a coordinate point beyond the collaborative elliptic curve.

The policy determining module 1012 is further configured to: if the second decrypted data component does not meet the expression of the collaborative elliptic curve or the second decrypted data component is an infinity point on the collaborative elliptic curve, determine that the second decrypted data component does not meet the collaborative decryption policy, and output first error information.

The apparatus 1 further includes a private key component generation module 1013, a public key generation module 1014, and a publishing module 1015.

The receiving module 1001 is further configured to receive a second public key component transmitted by the second service terminal. The second public key component is generated by the second service terminal based on the second private key component and the base point on the collaborative elliptic curve.

The private key component generation module 1013 is configured to generate, by using a second random number generator, the first private key component used for data decryption.

The public key generation module 1014 is configured to collaboratively generate the collaborative public key based on the first private key component, the second public key component, and the base point on the collaborative elliptic curve when it is determined that the first private key component meets private key validity.

The publishing module 1015 is configured to publish the collaborative public key.

The apparatus 1 further includes a public key component generation module 1016.

The private key component generation module 1013 is configured to generate, by using a second random number generator, the first private key component used for data decryption.

The public key component generation module 1016 is configured to generate a first public key component of the first service object based on the first private key component and the base point on the collaborative elliptic curve when it is determined that the first private key component meets private key validity.

The transmitting module 1004 is configured to transmit the first public key component to the second service terminal, so that the second service terminal generates, by using a third random number generator, the second private key component used for data decryption, and collaboratively generates the collaborative public key based on the second private key component, the first public key component, and the base point on the collaborative elliptic curve when determining that the second private key component meets private key validity.

The apparatus 1 further includes a validity determining module 1017.

The obtaining module 1010 is configured to obtain an associated value and an agreed-upon value that are associated with the first private key component, and perform a modulo operation based on the first private key component, the associated value, and the agreed-upon value to obtain a modulo value corresponding to the first private key component.

The validity determining module 1017 is configured to: if the modulo value corresponding to the first private key component is not equal to a preset target value, determine that the first private key component meets private key validity.

The validity determining module 1017 is further configured to: if the modulo value corresponding to the first private key component is equal to the target value, determine that the first private key component does not meet private key validity.

The private key component generation module 1013 is configured to re-generate, by using the second random number generator, a first private key component used for data decryption.

In this embodiment of this application, the first service terminal may receive the encrypted session data, for the session service data, that is transmitted by the data encryption terminal corresponding to the encryption service object. The first service object is a service object in a collaborative decryption object configured to perform data decryption. The encryption service object is a service object configured to perform data encryption. The encrypted session data is obtained by the data encryption terminal by encrypting the session service data by using a collaborative public key associated with the collaborative decryption object. The collaborative public key is generated based on the first private key component of the first service object and the second private key component of the second service object in the collaborative decryption object. Further, when determining that the first encrypted data component in the encrypted session data meets a collaborative decryption policy associated with the collaborative decryption object, the first service terminal may generate, by using the first random number generator, the random mask configured for performing mask processing on the first encrypted data component. Further, when performing mask processing on the first encrypted data component by using the random mask to obtain the mask data, the first service terminal may further obtain, based on the first private key component and the mask data, the first decrypted data component corresponding to the first encrypted data component. Further, the first service terminal may transmit the first decrypted data component to the second service terminal corresponding to the second service object. In this way, when determining that the first decrypted data component meets the collaborative decryption policy, the second service terminal further performs collaborative decryption on the first decrypted data component based on the second private key component to obtain the second decrypted data component through collaborative decryption. Further, the first service terminal may obtain the session service data through decryption based on the second decrypted data component and the first encrypted data component when determining that the received second decrypted data component returned by the second service terminal meets the collaborative decryption policy. In this embodiment of this application, session service data needs to be obtained through collaborative decryption by using private key components of two-party collaborative decryption objects that participate in the collaborative decryption. This means that neither of the two-party collaborative decryption objects that participate in the collaborative decryption can independently obtain session service data through decryption by using a private key component stored by the object in a single-point mode. To be specific, in this embodiment of this application, to ensure security and reliability of session service data obtained through decryption, private key components used for collaborative decryption may be respectively deployed on different service terminals. This can avoid private key leakage caused by single-point storage of the private key (namely, a complete private key) in the related art In addition, when different service terminals are configured to jointly perform collaborative decryption, fuzzy processing may be performed on each private key component, to avoid a risk of unauthorized acquisition of a private key component of each service terminal during collaborative decryption. Further, this can ensure reliability and security of session service data that is finally obtained through collaborative decryption by using different private key components.

Further, FIG. 11 is a schematic diagram of a structure of a data processing apparatus according to an embodiment of this application. The data processing apparatus 2 may be a computer program (including program code) that is run on a second service terminal (namely, the service terminal 102 in FIG. 1). For example, the data processing apparatus 2 may be application software. The second service terminal herein is a service terminal among a plurality of service terminals. The plurality of service terminals herein further include a first service terminal other than the second service terminal. The first service terminal stores a first private key component pre-generated for a first service object. The second service terminal stores a second private key component pre-generated for a second service object. The first private key component and the second private key component are configured to collaboratively generate a collaborative public key for data encryption. Both the first service object and the second service object are service objects participating in data decryption. The data processing apparatus 2 may be configured to perform corresponding operations in the data processing method provided in the embodiments of this application. The data processing apparatus 2 may include a receiving module 1101, a collaborative decryption module 1102, and a return module 1103.

The receiving module 1101 is configured to receive a first decrypted data component. The first decrypted data component is transmitted by the first service terminal, the first decrypted data component is obtained by the first service terminal based on the first private key component and mask data. The mask data is obtained by the first service terminal by performing mask processing on a first encrypted data component in encrypted session data by using a random mask. The random mask is configured to indicate the first service terminal to perform mask processing on the first encrypted data component. The encrypted session data is transmitted by a data encryption terminal corresponding to an encryption service object. The encryption service object is a service object that performs data encryption on to-be-transmitted session service data. The encrypted session data is obtained by performing data encryption on the session service data to be transmitted by using the collaborative public key.

The collaborative decryption module 1102 is configured to perform collaborative decryption on the first decrypted data component based on the second private key component to obtain a second decrypted data component through collaborative decryption.

The return module 1103 is configured to return the second decrypted data component to the first service terminal, so as to enable the first service terminal to obtain the session service data by using the second decrypted data component and the first encrypted data component for the data decryption.

The apparatus 2 further includes a policy determining module 1104.

The policy determining module 1104 is configured to: if the first decrypted data component meets an expression of a collaborative elliptic curve in a collaborative decryption policy and the first decrypted data component is not an infinity point, determine that the first decrypted data component meets the collaborative decryption policy.

The policy determining module 1104 is further configured to: if the first decrypted data component does not meet the expression of the collaborative elliptic curve or the first decrypted data component is an infinity point, determine that the first decrypted data component does not meet the collaborative decryption policy.

The return module 1103 is configured to return second error information to the first service terminal. The second error information is configured for indicating that the first decrypted data component is incorrect.

The apparatus 2 further includes a private key component generation module 1105, a public key generation module 1106, and a publishing module 1107.

The receiving module 1101 is configured to receive a first public key component of the first service object that is transmitted by the first service terminal. The first public key component is generated by the first service terminal by using the first private key component and a base point on the collaborative elliptic curve.

The private key component generation module 1105 is configured to generate, by using a third random number generator, the second private key component used for data decryption.

The public key generation module 1106 is configured to collaboratively generate the collaborative public key based on the second private key component, the first public key component, and the base point on the collaborative elliptic curve when it is determined that the second private key component meets private key validity.

The publishing module 1107 is configured to publish the collaborative public key.

The second service terminal is the data encryption terminal, the encryption service object is the second service object, and the apparatus 2 further includes an obtaining module 1108, an encryption module 1109, and a transmitting module 1110.

The obtaining module 1108 is configured to: when the first service object performs a session with the second service object through the first service terminal, obtain session service data for the session.

The encryption module 1109 is configured to encrypt the session service data by using the collaborative public key to obtain encrypted session data.

The transmitting module 1110 is configured to transmit the encrypted session data to the first service terminal.

In this embodiment of this application, the second service terminal and the first service terminal may perform collaborative decryption by using private key components of two-party collaborative decryption objects that participate in the collaborative decryption, to obtain session service data. This means that neither of the two-party collaborative decryption objects that participate in the collaborative decryption can independently obtain session service data through decryption by using a private key component stored by the object in a single-point mode. To be specific, in this embodiment of this application, to ensure security and reliability of session service data obtained through decryption, private key components used for collaborative decryption may be respectively deployed on different service terminals (to be specific, the first service terminal may be configured to store the first private key component of the first service object, and the second service terminal may be configured to store the second private key component of the second service object). This can avoid private key leakage caused by single-point storage of the private key (namely, a complete private key) in the related art. In addition, during collaborative decryption by using the first private key component and the second private key component, a private key (namely, a complete private key) configured for performing data decryption on encrypted session data may be obtained through simulation by using the first private key component and the second private key component. Further, correctness of session service data obtained through collaborative decryption by using the first private key component and the second private key component may be verified by using the private key (namely, the complete private key) obtained through simulation. In addition, in this embodiment of this application, during collaborative decryption by using different private key components stored on different service terminals, fuzzy processing is performed on each private key component, to avoid a risk of unauthorized acquisition of a private key component of each service terminal. Further, this can ensure reliability and security of session service data that is finally obtained through collaborative decryption by using different private key components.

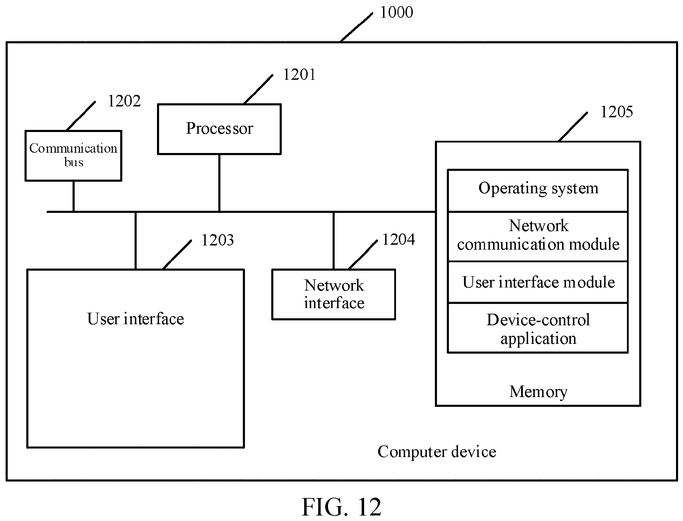

Further, FIG. 12 is a schematic diagram of a structure of a computer device according to an embodiment of this application. As shown in FIG. 12, the computer device 1000 may be a first service terminal, for example, the first service terminal 101 in the embodiment corresponding to FIG. 1; or the computer device 1000 may be a second service terminal, for example, the second service terminal 102 in the embodiment corresponding to FIG. 1. The computer device 1000 may include a processor 1201, a network interface 1204, and a memory 1205. In addition, the computer device 1000 may further include a user interface 1203 and at least one communication bus 1202. The communication bus 1202 is configured to implement connection and communication between these components. The user interface 1203 may further include a standard wired interface and a standard wireless interface. In some embodiments, the network interface 1204 may include a standard wired interface and a standard wireless interface (for example, a wireless fidelity (Wi-Fi) interface). The memory 1205 may be a high-speed random access memory (RAM), or may be a non-volatile memory, for example, at least one magnetic disk memory. In some embodiments, the memory 1205 may alternatively be at least one storage apparatus located away from the processor 1201. As shown in FIG. 12, the memory 1205 used as a computer-readable storage medium may include an operating system, a network communication module, a user interface module, and a device-control application.

For example, the network interface 1204 in the computer device 1000 may further provide a network communication function. In the computer device 1000 shown in FIG. 12, the network interface 1204 may provide a network communication function. The user interface 1203 is mainly configured to provide an input interface for a user. The processor 1201 may be configured to invoke the device-control application stored in the memory 1205 to implement the descriptions of the data processing method in the embodiments corresponding to FIG. 5 to FIG. 8, or may implement the descriptions of the data processing apparatus 1 in the embodiment corresponding to FIG. 10 or the descriptions of the data processing apparatus 2 in the embodiment corresponding to FIG. 11. Details are not described herein again. In addition, beneficial effects of the same method are not described herein again.

In addition, the embodiments of this application further provide a computer-readable storage medium. The computer-readable storage medium stores a computer program to be executed by the data processing apparatus 1 or the data processing apparatus 2. The computer program includes computer instructions. When executing the computer instructions, the processor can implement the descriptions of the data processing method in the embodiments corresponding to FIG. 5 to FIG. 8. Therefore, details are not described herein again. In addition, beneficial effects of the same method are not described herein again. For technical details that are not disclosed in the embodiment of the computer-readable storage medium in this application, refer to the descriptions of the method embodiments of this application. In an example, the computer instructions may be deployed on one computing device for execution, or may be executed on a plurality of computing devices at one location, or may be executed on a plurality of computing devices that are distributed at a plurality of locations and that are interconnected through a communication network. The plurality of computing devices that are distributed at a plurality of locations and that are interconnected through a communication network may form a blockchain system.

In addition, the embodiments of this application further provide a computer program product or a computer program. The computer program product or the computer program may include computer instructions, and the computer instructions may be stored in a computer-readable storage medium. A processor of a computer device reads the computer instructions from the computer-readable storage medium, and the processor may execute the computer instructions, so that the computer device implements the descriptions of the data processing method in the embodiments corresponding to FIG. 5 to FIG. 8. Therefore, details are not described herein again. In addition, beneficial effects of the same method are not described herein again. For technical details that are not disclosed in the embodiment of the computer program product or the computer program in this application, refer to the descriptions of the method embodiments of this application.

A person of ordinary skill in the art may understand that all or some of the processes of the methods of the foregoing embodiments may be implemented by a computer program instructing relevant hardware. The program may be stored in a computer-readable storage medium. When the program is executed, the processes of the foregoing method embodiments may be implemented. The storage medium may be a magnetic disk, an optical disc, a read-only memory (ROM), a RAM, or the like.

What is disclosed above is merely exemplary embodiments of this application, and certainly is not intended to limit the scope of the claims of this application. Therefore, equivalent variations made in accordance with the claims of this application shall fall within the scope of this application.

## Claims

1. A data processing method, the method being performed by a first service terminal among a plurality of service terminals, the plurality of service terminals further comprising a second service terminal other than the first service terminal, the first service terminal storing a first private key component pre-generated for a first service object, the second service terminal storing a second private key component pre-generated for a second service object, the first private key component and the second private key component being configured to collaboratively generate a public key for data encryption, both the first service object and the second service object being service objects participating in data decryption, and the method comprising:
receiving encrypted session data, the encrypted session data being obtained by performing data encryption on session service data to be transmitted using the public key;
obtaining a first encrypted data component from the encrypted session data, and generating a random mask configured to perform mask processing on the first encrypted data component;
performing mask processing on the first encrypted data component by using the random mask to obtain mask data corresponding to the first encrypted data component, and obtaining, based on the first private key component and the mask data, a first decrypted data component corresponding to the first encrypted data component;
transmitting the first decrypted data component to the second service terminal, so as to enable the second service terminal to perform collaborative decryption on the first decrypted data component based on the second private key component to obtain a second decrypted data component to be returned to the first service terminal; and
obtaining the session service data by using the second decrypted data component and the first encrypted data component for the data decryption.

2. The method according to claim 1, wherein the encrypted session data comprises a second encrypted data component, the first encrypted data component is an encrypted data component that meets a collaborative decryption policy and that is determined by the first service terminal, and the collaborative decryption policy comprises a collaborative elliptic curve used for data decryption; and
the obtaining the session service data by using the second decrypted data component and the first encrypted data component for the data decryption comprises:
determining a decryption elliptic curve point on the collaborative elliptic curve based on the second decrypted data component and the first encrypted data component;
extracting the second encrypted data component from the encrypted session data, and determining a bit length of the second encrypted data component;
performing key extension on the bit length and the decryption elliptic curve point by using a KDF in the collaborative decryption policy to obtain a key derivation bit string; and
obtaining the session service data through decryption based on the key derivation bit string and the second encrypted data component when it is determined that the key derivation bit string meets a decryption condition in the collaborative decryption policy.

3. The method according to claim 2, wherein the encrypted session data further comprises a third encrypted data component, and the method further comprises:
performing hash calculation on the session service data obtained through decryption and the decryption elliptic curve point to obtain a digest value corresponding to the session service data;
extracting the third encrypted data component from the encrypted session data, and comparing the digest value corresponding to the session service data with the third encrypted data component; and
outputting the session service data when the digest value corresponding to the session service data is the same as the third encrypted data component.

4. The method according to any one of claims 1 to 3, wherein the method further comprises:
obtaining an agreed-upon value associated with the random mask, and performing a modulo operation based on the random mask and the agreed-upon value to obtain a modulo value corresponding to the random mask, the agreed-upon value being an order of a base point that is agreed-upon on the collaborative elliptic curve; and
if the modulo value corresponding to the random mask is not equal to a preset mask value, performing mask processing on the first encrypted data component by using the random mask to obtain the mask data.

5. The method according to claim 4, wherein the method further comprises:
if the modulo value corresponding to the random mask is equal to the mask value, re-generating, by using a first random number generator, a random mask configured for performing mask processing on the first encrypted data component.

6. The method according to any one of claims 1 to 5, wherein the first encrypted data component is an encrypted data component that meets a collaborative decryption policy and that is determined by the first service terminal, and the collaborative decryption policy comprises a collaborative elliptic curve used for collaborative decryption; and
the method further comprises:
if the second decrypted data component meets an expression of the collaborative elliptic curve and the second decrypted data component is not an infinity point, determining that the second decrypted data component meets the collaborative decryption policy, the infinity point being a coordinate point beyond the collaborative elliptic curve.

7. The method according to any one of claims 1 to 6, wherein the method further comprises:
receiving a second public key component transmitted by the second service terminal, the second public key component being generated by the second service terminal based on the second private key component and the base point on the collaborative elliptic curve;
generating, by using a second random number generator, the first private key component used for data decryption;
collaboratively generating the public key based on the first private key component, the second public key component, and the base point on the collaborative elliptic curve when it is determined that the first private key component meets private key validity; and
publishing the public key.

8. The method according to any one of claims 1 to 6, wherein the method further comprises:
generating, by using a second random number generator, the first private key component used for data decryption;
generating a first public key component of the first service object based on the first private key component and the base point on the collaborative elliptic curve when it is determined that the first private key component meets private key validity; and
transmitting the first public key component to the second service terminal, so that the second service terminal generates, by using a third random number generator, a second private key component used for decrypting data, and collaboratively generates the public key based on the second private key component, the first public key component, and the base point on the collaborative elliptic curve when determining that the second private key component meets private key validity.

9. The method according to claim 7 or 8, wherein the method further comprises:
obtaining an associated value and an agreed-upon value that are associated with the first private key component, and performing a modulo operation based on the first private key component, the associated value, and the agreed-upon value to obtain a modulo value corresponding to the first private key component; and
if the modulo value corresponding to the first private key component is not equal to a preset target value, determining that the first private key component meets private key validity.

10. The method according to claim 9, wherein the method further comprises:
if the modulo value corresponding to the first private key component is equal to the target value, determining that the first private key component does not meet private key validity, and re-generating, by using the second random number generator, a first private key component used for data decryption.

11. A data processing method, the method being performed by a second service terminal among a plurality of service terminals, the plurality of service terminals further comprising a first service terminal other than the second service terminal, the first service terminal storing a first private key component pre-generated for a first service object, the second service terminal storing a second private key component pre-generated for a second service object, the first private key component and the second private key component being configured to collaboratively generate a public key for data encryption, both the first service object and the second service object being service objects participating in data decryption, and the method comprising:
receiving a first decrypted data component, the first decrypted data component being obtained by the first service terminal based on the first private key component and mask data, the mask data being obtained by the first service terminal by performing mask processing on a first encrypted data component in encrypted session data by using a random mask, the random mask being configured to indicate the first service terminal to perform mask processing on the first encrypted data component, the encrypted session data being transmitted by a data encryption terminal corresponding to an encryption service object, the encryption service object being a service object that performs data encryption on to-be-transmitted session service data, and the encrypted session data being obtained by performing data encryption on the session service data to be transmitted by using the public key;
performing collaborative decryption on the first decrypted data component based on the second private key component to obtain a second decrypted data component through collaborative decryption; and
returning the second decrypted data component to the first service terminal, so as to enable the first service terminal to obtain the session service data by using the second decrypted data component and the first encrypted data component for the data decryption.

12. The method according to claim 11, wherein the method further comprises:
if the first decrypted data component meets an expression of a collaborative elliptic curve in a collaborative decryption policy and the first decrypted data component is not an infinity point, determining that the first decrypted data component meets the collaborative decryption policy.

13. The method according to claim 12, wherein the method further comprises:
if the first decrypted data component does not meet the expression of the collaborative elliptic curve or the first decrypted data component is an infinity point, determining that the first decrypted data component does not meet the collaborative decryption policy, and returning second error information to the first service terminal, the second error information being configured to indicate that the first decrypted data component is incorrect.

14. The method according to any one of claims 11 to 13, wherein the method further comprises:
receiving a first public key component of the first service object that is transmitted by the first service terminal, the first public key component being generated by the first service terminal by using the first private key component and a base point on the collaborative elliptic curve;
generating, by using a third random number generator, a second private key component used for data decryption;
collaboratively generating the public key based on the second private key component, the first public key component, and the base point on the collaborative elliptic curve when it is determined that the second private key component meets private key validity; and
publishing the public key.

15. The method according to any one of claims 11 to 14, wherein the second service terminal is the data encryption terminal, the encryption service object is the second service object, and the method further comprises:
when the first service object performs a session with the second service object through the first service terminal, obtaining session service data for the session, and encrypting the session service data by using the public key to obtain encrypted session data; and
transmitting the encrypted session data to the first service terminal.

16. A data processing apparatus, the data processing apparatus running on a first service terminal among a plurality of service terminals, the plurality of service terminals further comprising a second service terminal other than the first service terminal, the first service terminal storing a first private key component pre-generated for a first service object, the second service terminal storing a second private key component pre-generated for a second service object, the first private key component and the second private key component being configured to collaboratively generate a public key for data encryption, both the first service object and the second service object being service objects participating in data decryption, and the apparatus comprising:
a receiving module, configured to receive encrypted session data, and the encrypted session data being obtained by performing data encryption on session service data to be transmitted using the public key;
a mask generation module, configured to obtain a first encrypted data component from the encrypted session data, and generate a random mask configured to perform mask processing on the first encrypted data component;
a decrypted data component generation module, configured to perform mask processing on the first encrypted data component by using the random mask to obtain mask data corresponding to the first encrypted data component, and obtain, based on the first private key component and the mask data, a first decrypted data component corresponding to the first encrypted data component;
a transmitting module, configured to transmit the first decrypted data component to the second service terminal, so as to enable the second service terminal to perform collaborative decryption on the first decrypted data component based on the second private key component to obtain a second decrypted data component to be returned to the first service terminal; and
a decryption module, configured to obtain the session service data by using the second decrypted data component and the first encrypted data component for the data decryption.

17. A data processing apparatus, the data processing apparatus running on a second service terminal among a plurality of service terminals, the plurality of service terminals further comprising a first service terminal other than the second service terminal, the first service terminal storing a first private key component pre-generated for a first service object, the second service terminal storing a second private key component pre-generated for a second service object, the first private key component and the second private key component being configured to collaboratively generate a public key for data encryption, both the first service object and the second service object being service objects participating in data decryption, and the apparatus comprising:
a receiving module, configured to receive a first decrypted data component, the first decrypted data component being obtained by the first service terminal based on the first private key component and mask data, the mask data being obtained by the first service terminal by performing mask processing on a first encrypted data component in encrypted session data by using a random mask, the random mask being configured to indicate the first service terminal to perform mask processing on the first encrypted data component, the encrypted session data being transmitted by a data encryption terminal corresponding to an encryption service object, the encryption service object being a service object that performs data encryption on to-be-transmitted session service data, and the encrypted session data being obtained by performing data encryption on the session service data to be transmitted by using the public key;
a collaborative decryption module, configured to perform collaborative decryption on the first decrypted data component based on the second private key component to obtain a second decrypted data component through collaborative decryption; and
a return module, configured to return the second decrypted data component to the first service terminal, so as to enable the first service terminal to obtain the session service data by using the second decrypted data component and the first encrypted data component for the data decryption.

18. A computer device, comprising:
a processor suitable for executing a computer program; and
a computer-readable storage medium, the computer-readable storage medium storing a computer program, and the data processing method according to any one of claims 1 to 15 being performed when the computer program is executed by the processor.

19. A computer-readable storage medium, the computer-readable storage medium storing a computer program, and the data processing method according to any one of claims 1 to 15 being performed when the computer program is executed by a processor.

20. A computer program product, the computer program product comprising a computer program, and the data processing method according to any one of claims 1 to 15 being implemented when the computer program is executed by a processor.
